(19) **Europäisches Patentamt**
**European Patent Office**
**Office européen des brevets**

(11) **EP 3 944 125 B1**

(12) **EUROPEAN PATENT SPECIFICATION**

(45) Date of publication and mention
of the grant of the patent:
**16.10.2024 Bulletin 2024/42**

(51) International Patent Classification (IPC):
**G06F 30/28** (2020.01) **F28F 13/02** (2006.01)
**F28F 13/08** (2006.01) **G06F 30/27** (2020.01)
**G06F 119/08** (2020.01) **G06F 111/08** (2020.01)

(21) Application number: **20205881.4**

(22) Date of filing: **05.11.2020**

(52) Cooperative Patent Classification (CPC):
**G06F 30/28; G06F 17/18; G06F 30/27;**
F28F 2200/00; G06F 2111/08; G06F 2119/08

(54) **METHOD AND SYSTEM FOR MANUFACTURING A HEAT EXCHANGER FOR SUPERCRITICAL PRESSURE FLUID**

VERFAHREN UND VORRICHTUNG ZUR HERSTELLUNG EINES WÄRMETAUSCHERS FÜR ÜBERKRITISCHES DRUCKFLUID

MÉTHODE ET SYSTÈME DE FABRICATION D'UN ÉCHANGEUR DE CHALEUR POUR FLUIDE À PRESSION SUPERCRITIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2020 CN 202010716041**

(43) Date of publication of application:
**26.01.2022 Bulletin 2022/04**

(73) Proprietor: **Tsinghua University**
**Beijing (CN)**

(72) Inventors:
• **Xu, Ruina**
**Beijing (CN)**
• **Jiang, Peixue**
**Beijing (CN)**
• **Wang, Chao**
**Beijing (CN)**
• **Zhang, Zhipeng**
**Beijing (CN)**

(74) Representative: **Schrell, Andreas et al**
**Gleiss Große Schrell und Partner mbB**
**Patentanwälte Rechtsanwälte**
**Leitzstrasse 45**
**70469 Stuttgart (DE)**

(56) References cited:
**CN-A- 109 508 851**

• LI XU ET AL: "A cooperative radial basis function method for variable-fidelity surrogate modeling", STRUCTURAL AND MULTIDISCIPLINARY OPTIMIZATION, SPRINGER BERLIN HEIDELBERG, BERLIN/HEIDELBERG, vol. 56, no. 5, 15 May 2017 (2017-05-15), pages 1077 - 1092, XP036330459, ISSN: 1615-147X, [retrieved on 20170515], DOI: 10.1007/S00158-017-1704-6
• YANG XIU ET AL: "Physics-informed CoKriging: A Gaussian-process-regression-based multifidelity method for data-model convergence", JOURNAL OF COMPUTATIONAL PHYSICS, LONDON, GB, vol. 395, 19 June 2019 (2019-06-19), pages 410 - 431, XP085758713, ISSN: 0021-9991, [retrieved on 20190619], DOI: 10.1016/J.JCP.2019.06.041
• ELSAYED KHAIRY ED - SALMAN AGBA D ET AL: "Optimization of the cyclone separator geometry for minimum pressure drop using Co-Kriging", POWDER TECHNOLOGY, ELSEVIER, BASEL (CH), vol. 269, 28 September 2014 (2014-09-28), pages 409 - 424, XP029115214, ISSN: 0032-5910, DOI: 10.1016/J.POWTEC.2014.09.038

**(Cont. next page)**

- **KAYABASI E. ET AL: "Simulation of heat exchangers and heat exchanger networks with an economic aspect", ENGINEERING SCIENCE AND TECHNOLOGY, AN INTERNATIONAL JOURNAL, vol. 21, no. 1, 1 February 2018 (2018-02-01), pages 70 - 76, XP055797502, ISSN: 2215-0986, Retrieved from the Internet <URL:https://www.researchgate.net/profile/Erhan-Kayabasi/publication/323312368_Simulation_of_heat_exchangers_and_heat_exchanger_networks_with_an_economic_aspect/links/5c4585cc458515a4c7352289/Simulation-of-heat-exchangers-and-heat-exchanger-networks-with-an-economic-aspect.pdf> [retrieved on 20210420], DOI: 10.1016/j.jestch.2018.02.006**

**Description**

**TECHNICAL FIELD**

The disclosure relates to the field of manufacture of a heat exchanger for supercritical pressure fluid, and in particular to a method and a system for manufacturing a heat exchanger for supercritical pressure fluid.

**BACKGROUND**

The supercritical $CO_2$ Brayton cycle is a Brayton cycle with $CO_2$ at a supercritical pressure as a working fluid. Compared with traditional cycles, it has the advantages of low power consumption in compression, high overall efficiency and compact structure. The $CO_2$ at supercritical pressure as a main working fluid has the characteristics of high density, low viscosity, strong diffusivity and permeability and the like, so the supercritical $CO_2$ Brayton cycle has wide development prospects in the fields of aero engines, fourth generation nuclear reactors, solar thermal power and the like. Since $CO_2$ at an inlet of a compressor during the cycle is close to a critical state, the convection heat transfer rule is very complex due to significantly variable physical properties of the $CO_2$, and thereby, it is necessary to study the internal flow and heat transfer rule of the heat exchanger.

In the document of LI XU ET AL: "A cooperative radial basis function method for variable-fidelity surrogate modeling", STRUCTURAL AND MULTDISCIPLINARY OPTIMIZATION, SPRINGER BERLIN HEIDELBERG, BERLIN/HEIDELBERG, vol. 56, no. 5, 15 May 2017 (2017-05-15), pages 1077-1092, a cooperative radial basis function (Co-RBF) method for the variable-fidelity model (VFM) is proposed by modifying the basis function of RBF. The RBF method is constructed on the high-fidelity (HF) samples, while the Co-RBF method incorporates the entire information of the low-fidelity (LF) model with the HF samples. In Co-RBF and the HF samples are utilized to compute the Co-RBF model coefficients. Two numerical functions and three engineering problems are adopted to verify the proposed Co-RBF are compared with those of RBF and Co-Kriging, which show that the Co-RBF method improves the efficiency, accuracy and robustness of the existing VFMs.

CN 109508854A discloses a method for evaluate that comprehensive performance of a supercritical carbon dioxide cycle power generation system of a small lead-based reactor. Firstly, the basic operating parameters of the supercritical carbon dioxide (S-CO2) cycle power generation system for lead-based reactor are determined. Subsequently, the modular design method is used to establish the sub-modules of turbomachinery work, heat transfer, heat exchanger pressure drop calculation, heat exchanger efficiency calculation, thermal analysis and economic analysis of power generation system. Then the iterative calculation method is used to solve the heat exchanger pressure drop calculation and the thermodynamic analysis sub-module of the power generation system, and the thermal performance of power generation system is evaluated.

In the Document of YANG XIU ET AL: "Physics-informed CoKriging: A Gaussian-process-regression-based multifidelity method for data-model convergence", JOURNAL OF COMPUTATIONAL PHYSICS, LONDON, GB, vol. 395, 19 June 2019 (2019-06-19), pages 410-431, a new Gaussian process regression (GPR)-based multifidelity method: physics-informed CoKriging (CoPhIK) is proposed. In CoKriging-based multifidelity methods, the quantities of interest are modeled as linear combinations of multiple parameterized stationary Gaussian processes (GPs), and the hyperparameters of these GPs are estimated from data via optimization. In GoPhIK, a GP representing low-fidelity data using physics-informed Kriging (PhIK) is constructed, the discrepancy between low- and high-fidelity data using a parameterized GP with hyperparameters identified via optimization is modelled.

In the document of ELSAYED KHAIRY ED - SALMAN AGBA D ET AL: "Optimization of the cyclone separator geometry for minimum pressure drop using Co-Kriging", POWDER TECHNOLOGY, ELSEVIER, BASEL (CH), vol. 269, 28 September 2014 (2014-09-28), pages 409-424, five approaches are proposed and tested for sampling update for the Co-Kriging. These approaches succeeded to enhance the model accuracy by adding few points from both the low-fidelity and high-fidelity simulations. The Co-Kriging model has been used to get a new optimized cyclone for minimum pressure drop using the genetic algorithms optimization technique. A CFD comparison between the new design and the standard Stairmand design has been performed.

In the document of KAYABASI E ET AL: "Simulation of heat exchangers and heat exchanger networks with an economic aspect", ENGINEERING SCIENCE AND TECHNOLOGY, AN INTERNATIONAL JOURNAL, vol. 21, no. 1, 1 February 2018 (2018-02-01), pages 70-76, relations between effectiveness and expense coefficients were derived, and an economic simulation model was developed to simulate heat exchangers (HE) and HE networks (HEN) in all flow types for the first time. Effectiveness values of parallel flow, counter flow, cross flow and all HEs under the condition of Cr=0 were derived in terms of the expense coefficients NTU (Number of Transfer Unit) and minimum heat capacities. The effectiveness values obtained from economic calculations were used for developing economic simulation model of HEs. Vectors including outlet temperatures and inlet temperatures of flows were obtained from static simulation to utilize in economic simulation model. Then, case studies were performed with counter flow HE and effectiveness values randomly determined in a sample HEN.

A type of heat exchanger possibly used for the supercritical $CO_2$ brayton cycle is a printed circuit heat exchanger (PCHE). The PCHE is manufactured by engraving grooves on metal substrates as cold and hot fluid flow passages, and then stacking cold and hot substrates alternately and welding these substrates through a diffusion bonding technology. Compared with the traditional heat exchangers, the PCHE has the advantages of better strength and integrity, and withstanding harsh conditions such as high temperature, high pressure, and large temperature difference.

At present, a more common design calculation method of PCHE is an overall design method based on inlet and outlet parameters of a heat exchanger with a logarithmic mean temperature difference method. Such method mainly includes: after determining a flow form of the heat exchanger, determining a fourth temperature value according to thermal equilibrium based on given heat transfer quantity and three temperatures of inlet and outlet temperatures at a cold side and a hot side of the heat exchanger, and calculating the logarithmic mean temperature difference. Assuming that the average values of the inlet and outlet temperatures are respectively temperature values of a fluid at the cold side and the hot side, an average Nusselt number and a heat transfer coefficient are calculated by using a correlation equation, and thereby structural parameters such as a heat transfer area, a passage length of the heat exchanger are determined after determining average physical parameters. The result designed by adopting the overall design method based on the average values of the inlet and outlet parameters is often rough, and is difficult to reflect the local convective heat transfer performance in the flow passages.

In order to solve the problem, areas of flow passages of the heat exchanger to be calculated can be discretized, and processes of calculation and iteration similar to the average method can be carried out on the areas discretized to obtain local convective heat transfer coefficients along the passages. However, on the one hand, a result obtained by using the correlation equation without considering changes in physical properties often has a low precision due to the variable physical properties of the supercritical pressure fluid. On the other hand, as the size of the passages in the heat exchanger is reduced, the influence of a heat acceleration phenomenon on the heat transfer is significantly increased, and in this case a prediction precision of the existing correlation is reduced, so that the precision and the reliability of the calculated result is greatly influenced. In addition, for complex working conditions, it often requires 100 or more data points to construct the correlation equation, and it is difficult to obtain a large number of high-precision data points, and the cost is also very high.

## SUMMARY

The embodiments aim to provide a method and a system for manufacturing a heat exchanger for supercritical pressure fluid to solve the difficulties of obtaining a large number of high-precision data points to construct a correlation equation in the existing manufacturing process of a heat exchanger for supercritical pressure fluid, which causes some problems, such as, the precision of structural parameters of predicted heat exchanger is low, and thus the manufactured heat exchanger is poor in performance.

In order to achieve the above object, the disclosure provides the following solutions.

It is provided a method for manufacturing a heat exchanger for supercritical pressure fluid, which has a first working fluid arranged in hot fluid passages of the heat exchanger and a second working fluid arranged in cold fluid passages of the heat exchanger. The method includes the following steps of:

- obtaining boundary conditions of the heat exchanger; the boundary conditions including first working fluid parameters and second working fluid parameters, the first working fluid parameters including an inlet temperature, an outlet temperature, a pressure and a flow of the first working fluid, the second working fluid parameters including an inlet temperature, an outlet temperature, a pressure and a flow of the second working fluid;
- adjusting a preliminary framework of the heat exchanger based on the boundary conditions, the preliminary framework of the heat exchanger including a passage equivalent diameter, a passage length, a passage number, and arrangements of cold fluid passages and hot fluid passages of the heat exchanger;
- dividing each of fluid passages along a fluid flow direction and establishing a thermal equilibrium control model for each divided fluid passage based on the preliminary framework of the heat exchanger, the fluid passages including hot fluid passages and cold fluid passages, each of the fluid passages including a plurality of the divided fluid passages;
- constructing a machine heat transfer model in combination with a Gaussian regression process and a Cokriging method based on the thermal equilibrium control model;
- determining convective heat transfer coefficients about the working fluids flowing and transferring heat in the fluid passages according to the machine heat transfer model, the on-way thermal parameters including a fluid temperature, a fluid velocity and a pressure loss;
- determining a heat transfer area according to the convective heat transfer coefficients;
- determining whether the heat transfer area meets a target heat transfer area to obtain a first determination result:

- manufacturing the heat exchanger according to the preliminary framework of the heat exchanger, when the first determination result indicates that the heat transfer area meets the target heat transfer area;
- readjusting the preliminary framework of the heat exchanger for repeating the above steps until the heat transfer area meets the target heat transfer area, if the first determination result indicates that the heat transfer area fails to meet the target heat transfer area; and manufacturing the heat exchanger according to a readjusted preliminary framework of the heat exchanger.

In some embodiments, the adjusting a preliminary framework of the heat exchanger based on the boundary conditions specifically includes:

- determining an average Nusselt number according to the first working fluid parameters and the second working fluid parameters;
- determining a first average convective heat transfer coefficient of the first working fluid and a second average convective heat transfer coefficient of the second working fluid respectively and determining the passage equivalent diameter according to the average Nusselt number;
- determining a total heat transfer coefficient according to the first average convective heat transfer coefficient and the second average convective heat transfer coefficient;
- determining a heat transfer quantity according to the total heat transfer coefficient;
- determining the passage length and the passage number according to the heat transfer quantity;
- determining the arrangements of cold fluid passages and hot fluid passages according to the passage length and the passage number;
- determining the preliminary framework of the heat exchanger according to passage equivalent diameter, passage length, passage number, and the arrangements of cold fluid passages and hot fluid passages.

In some embodiments, the dividing each of fluid passages along a fluid flow direction and establishing a thermal equilibrium control model for each divided fluid passage based on the preliminary framework of the heat exchanger specifically includes:
the thermal equilibrium control model being as follows:

$$q_i = q_{m\_hi} c_{p\_hi}(t_{hi} - t_{hi+1})$$

$$q_i = q_{m\_ci} c_{p\_ci}(t_{ci} - t_{ci+1})$$

$$q_i = k_i A_i(t_{m\_hi} - t_{m\_ci});$$

where $q_i$ is a heat flux in a i-th divided fluid passage; $q_{m\_ci}$ is a flow of a cold fluid; $q_{m\_hi}$ is a flow of a hot fluid; $c_{p\_hi}$ is a specific heat capacity at constant pressure of the hot fluid; $c_{p\_ci}$ is a specific heat capacity at constant pressure of the cold fluid; $t_{m\_ci}$ is a temperature of the first working fluid at a central node of the i-th divided fluid passage; $t_{m\_hi}$ is a temperature of the second working fluid at the central node of the i-th divided fluid passage; $A_i$ is a heat transfer area in the i-th divided fluid passage; i represents the i-th divided fluid passage; and *i+1* represents a next divided fluid passage relative to the *i-th* divided fluid passage.

In some embodiments, the constructing a machine heat transfer model in combination with a Gaussian regression process and a Cokriging method based on the thermal equilibrium control model specifically includes:

- obtaining heat transfer data of the supercritical pressure fluid, the heat transfer data of the supercritical pressure fluid including second precision and first precision heat transfer data, the second precision heat transfer data being a data set obtained from experiment or numerical simulation data, the first precision heat transfer data being a data set predicted by dimensionless criterion correlation equation, the heat transfer data of the supercritical pressure fluid being an on-way flow rate of the fluid, a wall surface temperature, a temperature of a main flow of the fluid, a fluid pressure, a convective heat transfer coefficient and a passage characteristic length;
- preprocessing the heat transfer data of the supercritical pressure fluid, and determining preprocessed heat transfer data of the supercritical pressure fluid, the preprocessed heat transfer data of the supercritical pressure fluid including preprocessed first precision and preprocessed second precision heat transfer data;
- determining a first precision model according to the preprocessed first precision heat transfer data based on a Gaussian regression equation;

- determining a second precision model according to the preprocessed second precision heat transfer data based on the Gaussian regression equation;
- determining a multi-precision model according to the first precision heat transfer data, the first precision model, the second precision heat transfer data and the second precision model by utilizing a Cokriging method based on the thermal equilibrium control model, the multi-precision model being a machine heat transfer model which takes dimensionless parameters of screened heat transfer data of the supercritical pressure fluid as an input and takes the convective heat transfer coefficient as an output, the screened heat transfer data of the supercritical pressure fluid including the on-way flow rate of the fluid, the wall surface temperature, main flow temperature of the fluid, fluid pressure, convective heat transfer coefficient and the passage characteristic length, the machine heat transfer model being used for determining on-way thermal parameters about the working fluids flowing and transferring heat in the fluid passages.

In some embodiments, the determining a multi-precision model according to the first precision heat transfer data, the first precision model, the second precision heat transfer data and the second precision model by utilizing a Cokriging method specifically includes:

- dividing the second precision heat transfer data into a training set and a testing set;
- determining a multi-precision model according to a formula: $\widehat{f}_2(X) = \rho(X)\widehat{f}_1(X) + \delta(X)$ by utilizing the training set, where $\widehat{f}_2(X)$ is a second precision model; $\widehat{f}_1(X)$ is a first precision model; $\rho(X)$ is a scale factor for quantifying a relationship between outputs of two precision models; $\delta(X)$ is a Gaussian process.

A system for manufacturing a heat exchanger for supercritical pressure fluid, which has a first working fluid arranged in hot fluid passages of the heat exchanger and a second working fluid arranged in cold fluid passages of the heat exchanger, the system includes:

a module for obtaining boundary conditions, configured for receiving the boundary conditions of the heat exchanger, the boundary conditions including first and second working fluid parameters, the first working fluid parameters including an inlet temperature, an outlet temperature, a pressure and a flow of the first working fluid; the second working fluid parameters including an inlet temperature, an outlet temperature, a pressure and a flow of the second working fluid;
a module for adjusting a preliminary framework of the heat exchanger, configured for adjusting the preliminary framework of the heat exchanger based on the boundary conditions, the preliminary framework of the heat exchanger including a passage equivalent diameter, a passage length, a passage number, and arrangements of cold fluid passages and hot fluid passages of the heat exchanger;
a module for establishing a thermal equilibrium control model, configured for dividing each of fluid passages along a fluid flow direction and establishing the thermal equilibrium control model for each divided fluid passage based on the preliminary framework of the heat exchanger, the fluid passages including hot fluid passages and cold fluid passages, each of the fluid passages including a plurality of the divided fluid passages;
a module for constructing a machine heat transfer model, configured for constructing the machine heat transfer model in combination with a Gaussian regression process and a Cokriging method based on the thermal equilibrium control model;
a module for determining on-way thermal parameters, configured for determining convective heat transfer coefficients about the working fluids flowing and transferring heat in the fluid passages according to the machine heat transfer model, the on-way thermal parameters including a fluid temperature, a fluid velocity and a pressure loss;
a module for determining a heat transfer area, configured for determining the heat transfer area according to the convective heat transfer coefficients;
a first determination module, configured for determining whether the heat transfer area meets a target heat transfer area, to obtain a first determination result;
a module for manufacturing the heat exchanger, configured for instructing to manufacture the heat exchanger according to the preliminary framework of the heat exchanger, if the first determination result indicates that the heat transfer area meets the target heat transfer area; and
a module for adjusting the preliminary framework of the heat exchanger, configured for readjusting the preliminary framework of the heat exchanger for repeating the above steps until the heat transfer area meets the target heat transfer area, if the first determination result indicates that the heat transfer area fails to meet the target heat transfer area and instructing to manufacturing the heat exchanger according to a readjusted preliminary framework of the heat exchanger.

In some embodiments, the module for adjusting the preliminary framework of the heat exchanger specifically includes:

a unit for determining an average Nusselt number, configured for determining an average Nusselt number according to the first and the second working fluid parameters;

a unit for determining a passage equivalent diameter, configured for determining a first average convective heat transfer coefficient of the first working fluid and a second average convective heat transfer coefficient of the second working fluid respectively and determining the passage equivalent diameter according to the average Nusselt number;

a unit for determining a total heat transfer coefficient, configured for determining the total heat transfer coefficient according to the first average convective heat transfer coefficient and the second average convective heat transfer coefficient;

a unit for determining a heat transfer quantity, configured for determining the heat transfer quantity according to the total heat transfer coefficient;

a unit for determining the passage length and the passage number, used for determining the passage length and the passage number according to the heat transfer quantity;

a unit for determining the arrangements of cold fluid passages and hot fluid passages, configured for determining the arrangements of cold fluid passages and hot fluid passages according to the passage length and the passage number;

a unit for determining a preliminary framework of the heat exchanger, configured for determining a preliminary framework of the heat exchanger according to the passage equivalent diameter, the passage length, the passage number, and the arrangements of cold fluid passages and hot fluid passages.

In some embodiments, the module for establishing the thermal equilibrium control model specifically includes: a unit for establishing a thermal equilibrium control model, configured for establishing a thermal equilibrium control model, and the thermal equilibrium control model being as follows:

$$q_i = q_{m\_hi} c_{p\_hi} (t_{hi} - t_{hi+1})$$

$$q_i = q_{m\_ci} c_{p\_ci} (t_{ci} - t_{ci+1})$$

$$q_i = k_i A_i (t_{m\_hi} - t_{m\_ci});$$

where $q_i$ is a heat flux in the i-th divided fluid passage; $q_{m\_ci}$ is a flow of a cold fluid; $q_{m\_hi}$ is a flow of a hot fluid; $c_{p\_hi}$ is a specific heat capacity at constant pressure of the hot fluid; $c_{p\_ci}$ is a specific heat capacity at constant pressure of the cold fluid; $t_{m\_ci}$ is a temperature of the first working fluid at a central node of the i-th divided fluid passage; $t_{m\_hi}$ is a temperature of the second working fluid at the central node of the i-th divided fluid passage; $A_i$ is a heat transfer area in the i-th divided fluid passage; i represents the i-th divided fluid passage; and *i+1* represents a next divided fluid passage relative to the *i-th* divided fluid passage.

In some embodiments, the module for constructing the machine heat transfer model specifically includes:

a module for obtaining heat transfer data of the supercritical pressure fluid, configured for obtaining the heat transfer data of the supercritical pressure fluid, the heat transfer data of the supercritical pressure fluid including second precision and first precision heat transfer data, the second precision heat transfer data being a data set obtained from experiment or numerical simulation data; the first precision heat transfer data being a data set predicted by dimensionless criterion correlation equation, the heat transfer data of the supercritical pressure fluid being an on-way flow rate of the fluid, a wall surface temperature, a temperature of a main flow of the fluid, a fluid pressure, a convective heat transfer coefficient and a passage characteristic length;

a preprocessing module, configured for preprocessing the heat transfer data of the supercritical pressure fluid, and determining preprocessed heat transfer data of the supercritical pressure fluid, the preprocessed heat transfer data of the supercritical pressure fluid including preprocessed first precision and preprocessed second precision heat transfer data;

a module for determining a low-precision model, configured for determining the first precision model according to the preprocessed first precision heat transfer data based on a Gaussian regression equation;

a module for determining a high-precision model, configured for determining the second precision model according to the preprocessed second precision heat transfer data based on the Gaussian regression equation; where the first precision heat transfer data has a lower precision than that of the second precision heat transfer data;

a module for determining a multi-precision model, configured for determining a multi-precision model according to the first precision heat transfer data, the first precision model, the second precision heat transfer data and the second precision model by utilizing a Cokriging method based on the thermal equilibrium control model, the multi-precision model being a machine heat transfer model which takes dimensionless parameters of screened heat transfer data of the supercritical pressure fluid as an input and takes the convective heat transfer coefficient as output, the screened heat transfer data of the supercritical pressure fluid including the on-way flow rate of the fluid, the wall surface temperature, the temperature of the main flow of the fluid, the fluid pressure, the convective heat transfer coefficient and the passage characteristic length, the machine heat transfer model being used for determining on-way thermal parameters about the working fluids flowing and transferring heat in the fluid passages.

In some embodiments, the module for determining the multi-precision model specifically includes:

a dividing unit, configured for dividing the second precision heat transfer data into a training set and a testing set;

an unit for determining the multi-precision model, configured for determining the multi-precision model according to

a formula: $\hat{f}_2(X) = \rho(X)\hat{f}_1(X) + \delta(X)$ by utilizing the training set, where $\hat{f}_2(X)$ is a second precision

model; $\hat{f}_1(X)$ is a first precision model; $\rho(X)$ is a scale factor for quantifying a relationship between output values of two precision models; $\delta(X)$ is a Gaussian process.

According to the specific embodiments provided by the disclosure, the disclosure has the following technical effects. The disclosure provides a method and a system for manufacturing a heat exchanger for supercritical pressure fluid, which determine a preliminary framework of the heat exchanger according to given boundary conditions of the heat exchanger, and construct a machine heat transfer model in combination with a Gaussian regression process and a Cokriging method, and continuously adjust the preliminary framework of the heat exchanger in an iterative manner by utilizing the machine heat transfer model instead of the existing correlation equation, enabling the finally determined heat transfer area meet a target heat transfer area, and then manufacture the heat exchanger by utilizing the adjusted preliminary framework of the heat exchanger, without a large number of high-precision data points, so as to improve the heat transfer performance of the heat exchanger.

## BRIEF DESCRIPTION OF THE DRAWINGS

In order to more clearly illustrate the embodiments of the disclosure or the technical solutions in the conventional art, the drawings used in the embodiments will be briefly described below, it is apparent that the drawings in the following description are only some embodiments of the disclosure, for those skilled in the art, other drawings can be obtained according to the drawings without inventive labors.

FIG. 1 is a flowchart of a method for manufacturing a heat exchanger for supercritical pressure fluid according to the present disclosure;

FIG. 2 is a flowchart of a design method of the heat exchanger for supercritical pressure fluid in combination with machine learning provided by the present disclosure; and

Fig. 3 is a structural chart of a system for manufacturing the heat exchanger for supercritical pressure fluid provided by the present disclosure.

## DETAILED DESCRIPTION

The technical solutions in the embodiments of the present disclosure will be clearly and completely described below combining with the accompanying drawings in the embodiments of the present disclosure, and it is apparent that embodiments described are only a part of embodiments of the present disclosure, and not all of them. All other embodiments, which are obtained by a person skilled in the art based on the embodiments of the present disclosure without inventive labors, shall fall within the protection scope of the present disclosure.

The disclosure aims to provide a method and a system for manufacturing a heat exchanger for supercritical pressure fluid, which can improve a performance of the heat exchanger for supercritical pressure fluid.

In order to make the above purposes, features and advantages of the present disclosure more comprehensible, the present disclosure is further and detailedly described combining with the accompanying drawings and specific embodiments thereof.

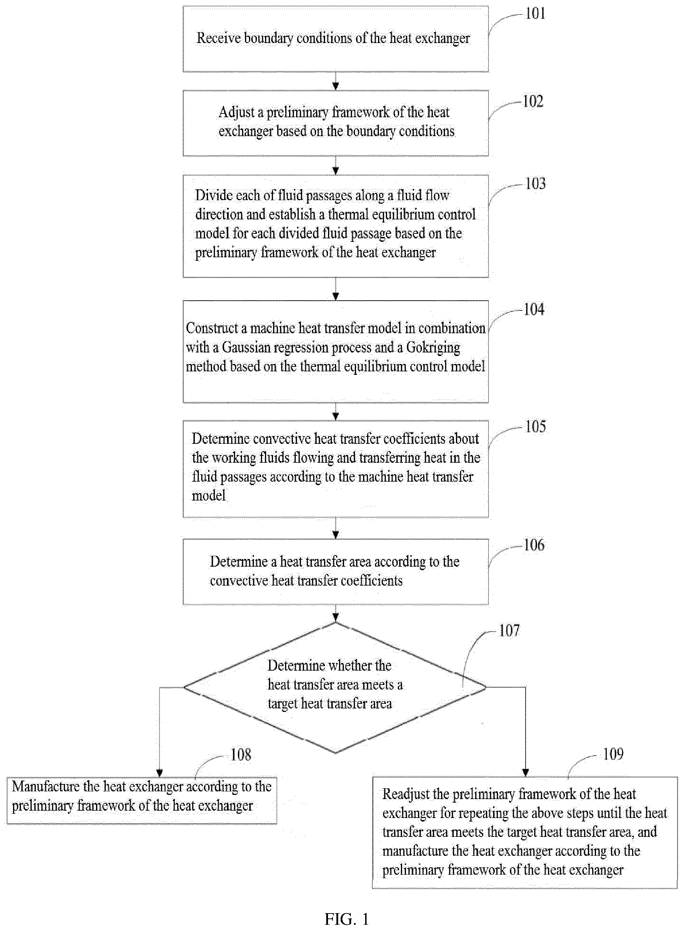

FIG. 1 is a flowchart of the method for manufacturing the heat exchanger for supercritical pressure fluid according to the present disclosure. It is provided the method for manufacturing the heat exchanger for supercritical pressure fluid as shown in FIG. 1, in which first working fluid is arranged in hot fluid passages of the heat exchanger for supercritical pressure fluid, and a second working fluid is arranged in cold fluid passages of the heat exchanger for supercritical pressure fluid, the method includes the following steps.

In step 101, boundary conditions of the heat exchanger for supercritical pressure fluid is received. The boundary conditions include first and second working fluids' parameters. The first working fluid parameters include an inlet temperature, an outlet temperature, a pressure and a flow of the first working fluid, and the second working fluid parameters include an inlet temperature, an outlet temperature, a pressure and a flow of the second working fluid.

In step 102, a preliminary framework of the heat exchanger is adjusted based on the boundary conditions. The preliminary framework of the heat exchanger includes a passage equivalent diameter, a passage length and a passage number, and arrangements of cold fluid passages and hot fluid passages of the heat exchanger.

The step 102 specifically includes the following steps of:

- determining an average Nusselt number according to the first and the second working fluid parameters;
- determining a first average convective heat transfer coefficient of the first working fluid and a second average convective heat transfer coefficient of the second working fluid respectively and determining the passage equivalent diameter according to the average Nusselt number;
- determining a total heat transfer coefficient according to the first average convective heat transfer coefficient and the second average convective heat transfer coefficient;
- determining a quantity of transferred heat according to the total heat transfer coefficient;
- determining the passage length and the passage number according to the quantity of transferred heat;
- determining the arrangements of cold fluid passages and hot fluid passages according to the passage length and the passage number; and
- determining the preliminary framework of the heat exchanger according to the passage equivalent diameter, the passage length, the passage number, and the arrangements of cold fluid passages and hot fluid passages.

In step 103, each of fluid passages is divided along a fluid flow direction and a thermal equilibrium control model is established for each divided fluid passage based on the preliminary framework of heat exchanger. The fluid passages include hot fluid passages and cold fluid passages, each of the fluid passages includes multiple divided fluid passages.

The step 103 specifically includes the following operations. The thermal equilibrium control model is as follows:

$$q_i = q_{m\_hi}c_{p\_hi}(t_{hi} - t_{hi+1})$$

$$q_i = q_{m\_ci}c_{p\_ci}(t_{ci} - t_{ci+1})$$

$$q_i = k_i A_i(t_{m\_hi} - t_{m\_ci});$$

where $q_i$ is a heat flux through the i-th divided fluid passage; $q_{m\_ci}$ is a flow of the cold fluid (here, is the second working fluid); $q_{m\_hi}$ is a flow of the hot fluid (here, is the first working fluid); $c_{p\_hi}$ is a specific heat capacity at constant pressure for the hot fluid; $c_{p\_ci}$ is a specific heat capacity at constant pressure for the cold fluid; $t_{m\_ci}$ is a temperature of the first working fluid at a central node of the i-th divided fluid passage; $t_{m\_hi}$ is a temperature of the second working fluid at the central node of the i-th divided fluid passage; $A_i$ is a heat transfer area in the i-th divided fluid passage; i represents the i-th divided fluid passage, and *i+1* represents a next divided fluid passage relative to the *i-th* divided fluid passage.

In step 104, a machine heat transfer model is constructed in combination with a Gaussian regression process and a Cokriging method based on the thermal equilibrium control model.

The step 104 specifically includes the following steps of:

- obtaining heat transfer data of the supercritical pressure fluid, the heat transfer data of the supercritical pressure fluid include high-precision and low-precision heat transfer data, the high-precision heat transfer data are a data set obtained by data from experiment or numerical simulation; the low-precision heat transfer data are a data set predicted by dimensionless criterion correlation equation, the heat transfer data of the supercritical pressure fluid are an on-way flow rate of the fluid, a wall surface temperature, a main flow temperature of the fluid, a fluid pressure, a convective heat transfer coefficient and a passage characteristic length;

- preprocessing the heat transfer data of the supercritical pressure fluid, and determining preprocessed heat transfer data of the supercritical pressure fluid, the preprocessed heat transfer data of the supercritical pressure fluid include preprocessed low-precision and preprocessed high-precision heat transfer data;
- determining a low-precision model according to the preprocessed low-precision heat transfer data based on a Gaussian regression equation;
- determining a high-precision model according to the preprocessed high-precision heat transfer data based on the Gaussian regression equation;
- determining a multi-precision model according to the low-precision heat transfer data, the low-precision model, the high-precision heat transfer data and the high-precision model by utilizing the Cokriging method based on the thermal equilibrium control model, the multi-precision model is a machine heat transfer model which takes dimensionless parameters of screened heat transfer data of the supercritical pressure fluid as an input and takes the convective heat transfer coefficient as an output, the screened heat transfer data of the supercritical pressure fluid include the on-way flow rate of the fluid, the wall surface temperature, the main flow temperature of the fluid, the fluid pressure, and the passage characteristic length, the machine heat transfer model is used for determining on-way thermal parameters about the working fluids flowing and transferring heat in the fluid passages.

The determining a multi-precision model according to the low-precision heat transfer data, the low-precision model, the high-precision heat transfer data and the high-precision model by utilizing the Cokriging method specifically includes: dividing the high-precision heat transfer data into a training set and a testing set; determining the multi-precision model according to a formula: $\hat{f}_2(X) = \overline{\rho}(X)\hat{f}_1(X) + \delta(X)$ , by utilizing the training set; where, $\hat{f}_2(X)$ is a high-precision model; $p(X)$ is a scale factor for quantifying a relationship between outputs of two precision models; $\hat{f}_1(X)$ is a low-precision model; $\delta(X)$ is a Gaussian process.

In step 105, the convective heat transfer coefficients about the working fluid flowing and transferring heat in the fluid passages are determined according to the machine heat transfer model. The on-way thermal parameters include a fluid temperature, a fluid velocity and a pressure loss.

In step 106, the heat transfer area is determined according to the convective heat transfer coefficients.

In step 107, it is determined whether the heat transfer area meets a target heat transfer area, if yes, step 108 is performed, and if not, step 109 is performed.

In step 108, the heat exchanger for supercritical pressure fluid is manufactured according to the preliminary framework of the heat exchanger.

In step 109, the primary framework of the heat exchanger is readjusted until the heat transfer area meets the target heat transfer area, and the heat exchanger is manufactured according to the preliminary framework of the heat exchanger.

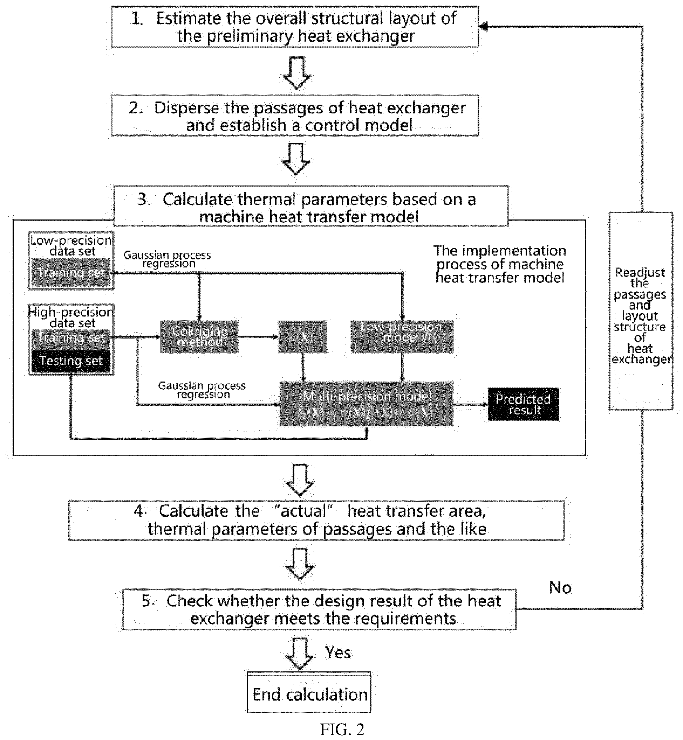

In practical application, FIG. 2 is a flowchart of a design method of the heat exchanger for supercritical pressure fluid in combination with machine learning provided by the present disclosure. As shown in FIG. 2, the design method includes the following steps.

1) Primarily designing an overall structure of the heat exchanger.

The known boundary conditions for the design of the heat exchanger mainly include the inlet temperature, the pressure and the flow of the first working fluid and the inlet temperature, the outlet temperature, the pressure and the flow of the second working fluid. Firstly, the outlet temperature of the first working fluid is calculated according to given boundary conditions and a thermal equilibrium equation. Secondly, a logarithmic mean temperature difference is calculated by a following expression according to the inlet and outlet temperatures of the first working fluid and the second working fluid,

$$\Delta t_m = \frac{\Delta t' - \Delta t''}{ln\frac{\Delta t'}{\Delta t''}}$$

$$(1)$$

where, $\Delta t'$ is a difference value between an inlet temperature of a working fluid at a hot side and an outlet temperature of a working fluid at a cold side, $\Delta t''$ is a difference value between an outlet temperature of the working fluid at the hot side and inlet temperature of the working fluid at the cold side.

Via the inlet and outlet temperatures and pressure information of the working fluids at the two sides of the heat exchanger, physical property parameters of the working fluids at qualitative temperature, such as density $\rho$, dynamic viscosity $\mu$, thermal conductivity $\lambda$, are determined, and criterion numbers such as an average Reynolds number $Re_b$ of the main flow and a Prandtl Number Pr are calculated. The average Nusselt number $Nu_0$ is calculated by the following criteria correlation equation:

$$Nu_0 = \frac{(\xi/8)\, Re_b\, \overline{Pr}}{12.7\sqrt{\xi/8}\left(\overline{Pr^{2/3}}-1\right)+1.07}\;,\quad \xi = \frac{1}{(1.82\, log_{10}Re_b - 1.64)^2} \tag{2}$$

where, Pr is the average Prandtl Number, $\xi$ is a friction factor.

After the average Nusselt number is obtained, the average convective heat transfer coefficients of working fluids in the passages at two sides of the heat transfer unit are calculated:

$$h_h = \frac{Nu_{0h}\lambda_h}{d}\,,\quad h_c = \frac{Nu_{0c}\lambda_c}{d} \tag{3}$$

where, subscripts h and c respectively represent the fluids at hot and cold sides, and $d$ is the equivalent diameter of flow passage. After the convective heat transfer coefficients of the two sides are calculated, a total heat transfer coefficient k can be obtained by the following expression:

$$k = \frac{1}{\frac{1}{h_h}+\frac{\delta}{\lambda}+\frac{1}{h_c}} \tag{4}$$

where $\lambda$ is a thermal conductivity of a metal plate between the cold and hot flow passages, and $\delta$ is an average thickness of the plate. The heat flux may be obtained by the total heat transfer coefficient and the logarithmic mean temperature difference:

$$q = k\Delta t_m \tag{5}$$

The total heat transfer area $A$ is calculated according to the heat transfer amount q and the heat flux, and a per unit flow passage length L is calculated according to the number of the flow passages N and a per unit heat transfer surface area of flow passage:

$$A = \frac{\Phi}{q} \tag{6}$$

$$l = \frac{A}{2N(\pi+2)R} \tag{7}$$

The overall framework of the heat exchanger is preliminarily obtained through the above calculations, and includes the equivalent diameter, the passage length and the passage number, the arrangements of the cold fluid passages and the hot fluid passages and the like of the heat exchanger. It is possible to carry out calculation on the thermal parameters of the local flowing working fluid along passages of the heat exchanger according to the established preliminary framework of the heat exchanger;

2) Dispersing the passages of heat exchanger and establishing a control model.

According to the preliminary framework of the heat exchanger obtained in the process 1), each flow passage unit is divided along the fluid flow direction into *n* micro sections in an equal or unequal manner, and a system of thermal equilibrium equations is established for each micro section.

$$q_i = q_{m\_hi} c_{p\_hi}(t_{hi} - t_{hi+1}) \tag{9}$$

$$q_i = q_{m\_ci} c_{p\_ci}(t_{ci} - t_{ci+1}) \tag{10}$$

$$q_i = k_i A_i(t_{m\_hi} - t_{m\_ci}) \tag{11}$$

In the above formulas, $q_i$ is a heat flux in the i-th micro section; $q_{m\_ci}$ and $q_{m\_hi}$ are respectively cold and hot fluid flows; $c_{p\_hi}$ and $c_{p\_ci}$ are respectively the specific heat capacities at constant pressure of the hot and cold fluid; $t_{m\_ci}$ and $t_{m\_hi}$ are respectively temperatures of the second working fluid and the first working fluid at the central nodes of the i-th micro section; $A_i$ is a heat transfer area in the i-th micro section, subscribe i represents the i-th micro section, and *i+1* represents a next micro section relative to the *i-th* micro section.

3) Calculating the thermal parameters based on the machine heat transfer model.

The implementation process mainly includes the following three aspects.

① Collecting and cleaning the heat transfer data of the existing supercritical pressure fluid

The experimental data and numerical simulation data are collected and summarized, which generally include the on-way flow rate of the fluid, the wall surface temperature, the temperature of the main flow of the fluid, the fluid pressure, the convective heat transfer coefficient and the passage characteristic length and the like. And a set of the data is cleaned, and abnormal data, outliers and the like contained in the data set are deleted.
The Nusselt number is a common dimensionless number in heat transfer theory, and represents an intensity of convective heat transfer in a physical sense, and the larger the value of the Nusselt number is, the stronger the intensity of convective heat transfer of fluid is, namely, the convective heat transfer performance is stronger. In general, it can be assumed that the Nusselt number is a function of a series of characteristic parameters and a vector including these characteristic parameters is x, then:

$$Nu = f(x)$$

The form of the feature vector x may vary depending on the parameters contained in the data set. In the present disclosure, the Reynolds number Re, Prandtl Number Pr, Bo* number, the ratio of physical properties calculated in the preprocessing step, and the dimensionless position corresponding to the parameter in the passage will be used as the

$$x = \left( \frac{x}{d}, \mathrm{Re}, \mathrm{Pr}, Bo^*, \frac{\overline{c_p}}{c_{pb}}, \frac{\rho_b}{\rho_w} \right)$$

characteristic parameters during prediction, that is,
[0054] The data set includes a high-precision data set and a low-precision data set, which include values of all the parameter in the feature vector and the value of the Nusselt number Nu to be predicted finally. The high and low precision mainly refers to the precision of a target value, i.e., Nusselt number Nu, to be predicted finally. The high-precision data set refers to a data set obtained by experiment data or numerical simulation data, and the low-precision data set refers to data predicted by using the dimensionless criterion correlation equation such as the formula (2) obtained based on existing research.
② Constructing a machine learning algorithm in combination with the Gaussian regression process and the Cokriging method, and training a multi-precision substitution model by using the existing data.
All data including the high-precision data set and the low-precision data set are randomly sampled, and then divided into a training set and a testing set which do not intersect with each other. The training set is used for training the machine learning model, and the testing set is used for evaluating the predictive performance of the machine learning model.

In the training process, the input parameters to the model are all parameters (i.e. the flow rate, the wall surface temperature, the temperature of the main flow of the fluid, the fluid pressure and the characteristic length) in the training set except for the convective heat transfer coefficient, and the output parameters are the convective heat transfer coefficient. The training is performed in an iterative manner. In each iteration, the output convective heat transfer coefficient is compared with the convective heat transfer coefficient in training set, and the iteration is performed continuously until a deviation there between is minimized, so as to obtain a substitution model for predicting the convective heat transfer coefficient of the supercritical fluid. There are two methods for training the substitution model, one of them uses the Gaussian regression process to construct a multi-precision substitution model and another uses the Cokriging method. The training process of these two substitution models is shown in FIG. 1. Specifically, in the training process by the gaussian regression process, the training set from the high-precision data set is directly adopted for training to obtain the substitute model. In the training process by the Cokriging method, the training data set from low-precision data set firstly is used for training to obtain a Gaussian process, namely a low-precision model $\hat{f}_1$; and then, the training data set from the high-precision data set is used for training to obtain a new Gaussian process $\delta$, namely high-precision model; next, the low-precision data, the low-precision model, the high-precision data and the high-precision model are used simultaneously for training a multi-precision model through a Cokriging method; last, relevant parameters in a training result are stored.

③ Predicting and calculating process

Similar to the data preprocessing step, the on-way thermophysical property parameters of the system are transformed into a dimensionless form, so that the format and the physical meaning thereof are consistent with those of the input parameters in the training process.

The dimensionless parameters transformed are substituted into the multi-precision substitution model trained to calculate the local convective heat transfer coefficients of the passages of the heat exchanger.

4) Calculating a "actual" heat transfer area and thermal parameters of passages based on a machine heat transfer model.

The on-way thermal parameters about the working fluids flowing and transferring heat in the passages of the heat exchanger, which mainly includes a temperature, a velocity, a pressure loss and the like, is calculated by the machine heat transfer model established in the process 3), to obtain a heat transfer area "actually" required.

5) Checking the design result of the heat exchanger

It is checked whether the structure obtained in the process 4) meets requirements according to design target parameters and constraint conditions of the heat exchanger. If yes, the design of the heat exchanger is finished; if not, the passage structure of the heat exchanger in the process 1) is adjusted, and the operations of the process 2), the process 3) and the process 4) are repeated until the check result for design in the process 5) meets the design target requirements of the heat exchanger.

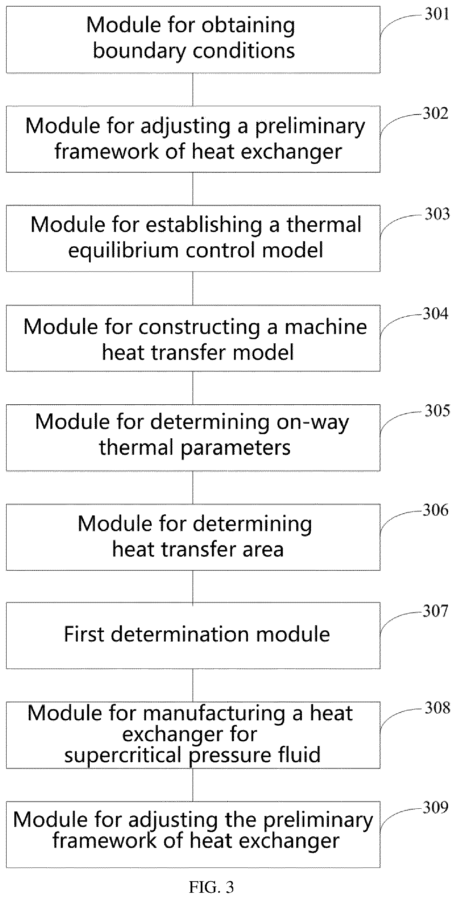

Fig. 3 is a structural chart of a system for manufacturing the heat exchanger for supercritical pressure fluid provided by the present disclosure. It is provided a system for manufacturing a heat exchanger for supercritical pressure fluid as shown in FIG. 3, and a first working fluid is arranged in hot fluid passages of the heat exchanger for supercritical pressure fluid, and a second working fluid is arranged in cold fluid passages of the heat exchanger for supercritical pressure fluid, the system includes a module for obtaining boundary conditions 301, a module for adjusting a preliminary frame of heat exchanger 302, a module for establishing a thermal equilibrium control model 303, a module for constructing a machine heat transfer model 304, a module for determining on-way thermal parameters 305, a module for determining heat transfer area 306, a first determination module 307, a module for manufacturing the heat exchanger for supercritical pressure fluid 308, and a module for adjusting the preliminary framework of the heat exchanger 309.

The module 301 is configured to obtain the boundary conditions of the heat exchanger for supercritical pressure fluid, which include first and second working fluid parameters. The first working fluid parameters include an inlet temperature, an outlet temperature, a pressure and a flow of the first working fluid. The second working fluid parameters include an inlet temperature, an outlet temperature, a pressure and a flow of the second working fluid.

The module 302 is configured to adjust a preliminary framework of the heat exchanger based on the boundary conditions. The preliminary framework of the heat exchanger includes a equivalent diameter, a length and a number of passages, and arrangements of cold fluid passages and hot fluid passages of the heat exchanger.

The module 302 specifically includes: an unit for determining an average Nusselt number, configured for determining the average Nusselt number according to the first and the second working fluid parameters; an unit for determining the equivalent diameter of passages, configured for determining a first average convective heat transfer coefficient of the first working fluid and a second average convective heat transfer coefficient of the second working fluid respectively and determining the equivalent diameter of passages according to the average Nusselt number; an unit for determining a total heat transfer coefficient, configured for determining the total heat transfer coefficient according to the first average convective heat transfer coefficient and the second average convective heat transfer coefficient; an unit for determining a heat exchange quantity, configured for determining the heat transfer quantity according to the total heat transfer coefficient; an unit for determining the length and the number of passages, configured for determining the passage length and the passage number according to the heat transfer quantity; an unit for determining the arrangements of cold fluid passages and hot fluid passages, configured for determining the arrangements of cold fluid passages and hot fluid passages according to the passage length and the passage number; an unit for determining the preliminary framework of the heat exchanger, configured for determining the preliminary framework of the heat exchanger according to the equivalent diameter, the passage length and the passage number, and the arrangements of cold fluid passages and hot fluid passages.

The module 303 is configured to divide each fluid passage along a fluid flow direction and establishing a thermal equilibrium control model for each divided fluid passage based on the preliminary framework of the heat exchanger. The fluid passages include hot fluid passages and cold fluid passages; one of the fluid passages includes a plurality of divided fluid passages.

The module 303 specifically includes a unit for establishing the thermal equilibrium control model, configured for establishing the thermal equilibrium control model. The thermal equilibrium control model is as follows:

$$q_i = q_{m\_hi} c_{p\_hi} (t_{hi} - t_{hi+1})$$

$$q_i = q_{m\_ci} c_{p\_ci} (t_{ci} - t_{ci+1})$$

$$q_i = k_i A_i (t_{m\_hi} - t_{m\_ci});$$

where $q_i$ are a heat flux in a i-th divided fluid passage; $q_{m\_ci}$ is a flow of the cold fluid; $q_{m\_hi}$ is a flow of the hot fluid flow; $c_{p\_hi}$ is a specific heat capacity at constant pressure of the hot fluid; $c_{p\_ci}$ is a specific heat capacity at constant pressure of the cold fluid; $t_{m\_ci}$ is a temperature of the first working fluid at a central node of the i-th divided fluid passage; $t_{m\_hi}$ is a temperature of the second working fluid at the central node of the i-th divided fluid passage; $A_i$ is a heat transfer area in the i-th divided fluid passage; i represents the i-th divided fluid passage; and *i+1* represents a next divided fluid passage relative to the *i-th* divided fluid passage.

The module 304 is configured to construct a machine heat transfer model in combination with a Gaussian regression process and a Cokriging method based on the thermal equilibrium control model.

The module 304 specifically includes a module for obtaining heat transfer data of the supercritical pressure fluid, a preprocessing module, a module for determining a low-precision model, a module for determining a high-precision model, a module for determining a multi-precision model.

The module for obtaining heat transfer data of the supercritical pressure fluid is configured for obtaining the heat transfer data of the supercritical pressure fluid. The heat transfer data of the supercritical pressure fluid include high-precision and low-precision heat transfer data. The high-precision heat transfer data are a data set obtained from experiment or numerical simulation data, and the low-precision heat transfer data are a data set predicted by a dimensionless criterion correlation equation. The heat transfer data of the supercritical pressure fluid are an on-way flow rate of the fluid, a wall surface temperature, a temperature of a main flow of the fluid, a fluid pressure, a convective heat transfer coefficient and the passage characteristic length.

The preprocessing module is configured for preprocessing the heat transfer data of the supercritical pressure fluid, and determining the preprocessed heat transfer data of supercritical pressure fluid. The preprocessed heat transfer data of the supercritical pressure fluid includes preprocessed low-precision and preprocessed high-precision heat transfer data.

The module for determining a low-precision model is configured for determining the low-precision model according to the preprocessed low-precision heat transfer data based on the Gaussian regression equation.

The module for determining a high-precision model is configured for determining a high-precision model according to the preprocessed high-precision heat transfer data based on the Gaussian regression equation.

The module for determining a multi-precision model is configured for determining the multi-precision model according to the low-precision heat transfer data, the low-precision model, the high-precision heat transfer data and the high-precision model by utilizing the Cokriging method based on the thermal equilibrium control model. The multi-precision model is a machine heat transfer model which takes dimensionless parameters of screened heat transfer data of the supercritical pressure fluid as an input and takes the convective heat transfer coefficient as an output. The screened heat transfer data of the supercritical pressure fluid include the on-way flow rate of the fluid, the wall surface temperature, the temperature of the main flow of the fluid, the fluid pressure, the convective heat transfer coefficient and the passage characteristic length. The machine heat transfer model is used for determining the on-way thermal parameters about the working fluids flowing and transferring heat in the fluid passages.

The module for determining the multi-precision model specifically includes: a dividing unit, configured for dividing the high-precision heat transfer data into a training set and a testing set; an unit for determining the multi-precision model, configured for determining the multi-precision model according to a formula $\widehat{f}_2(X) = \rho(X)\widehat{f}_1(X) + \delta(X)$ by utilizing the training set. where, $\widehat{f}_2(X)$ is the high-precision model; $\rho(X)$ is a scale factor for characterizing a quantitative relationship between output values of two precision model; $\widehat{f}_1(X)$ is the low-precision model; $\delta(X)$ is the Gaussian process.

The module 305 is configured for determining the on-way thermal parameters of about the working fluids flowing and transferring heat in the fluid passages according to the machine heat transfer model. The on-way thermal parameters include a fluid temperature, a fluid velocity and a pressure loss.

The module 306 is configured for determining the heat transfer area according to the on-way thermal parameters.

The first determination module 307 is configured for determining whether the heat transfer area meets a target heat transfer area to obtain a first determination result.

The module 308 is configured for manufacturing the heat exchanger for supercritical pressure fluid according to the preliminary framework of the heat exchanger if the first determination result indicates that the heat transfer area meets the target heat transfer area.

The module 309 is configured for readjusting the primary framework of the heat exchanger until the heat transfer area meets the target heat transfer area if the first determination result indicates that the heat transfer area fails to meet the target heat transfer area standard.

The machine heat transfer model established by the disclosure simultaneously employs high-precision data directly from numerical simulation for the supercritical pressure fluid, data calculated by utilizing criterion correlation equation of convection heat transfer and limited experimental data, and the prediction precision of the machine heat transfer model is higher, and particularly, the machine heat transfer model can provide more high-precision prediction for some extreme and unsteady heat transfer working conditions of the supercritical pressure fluid.

Meanwhile, the method for constructing the heat transfer machine model according to the disclosure can not only obtain the heat transfer coefficient of the supercritical pressure fluid with a higher precision than that of a heat transfer criterion correlation equation, but also itself has good generalization performance and stronger maneuverability. The model itself can be continuously improved in respect of the prediction precision by employing more and higher-precision data, and thus is healthily growing.

The disclosure trains a machine learning substitution model for heat transfer coefficient by means of the Gaussian process regression and Cokriging method in the machine learning technology and in combination with high-precision data from experiments and low-precision data predicted by the correlation equation. The substitution model is applied in the calculation process of the discrete iterative design about a heat exchanger as a substitution of the traditional method of designing the heat exchanger by using the empirical correlation equation, to quickly and accurately predict the on-way thermal parameters of the working fluid in the passages of heat exchanger, and eventually obtain a design solution of heat exchanger with higher comprehensive performance in respect of flow heat transfer.

The embodiments in the present description are described in a progressive manner, each embodiment focuses on differences from other embodiments, and the same and similar parts among the various embodiments can be referred to each other. For the system disclosed by the embodiment, its description is relatively simple because it corresponds to the method disclosed in the embodiment, and the relevant parts can be referred to the description of the method.

The principle and the implementation of the present disclosure are explained by using specific examples in the present description, and the above description of the embodiments is only used to help understand the method and the core idea of the present disclosure; meanwhile, it is apparent for a person skilled in the art to modify the specific embodiments and the application range according to the idea of the present disclosure. In conclusion, the contents of the description should not be construed as limitations on the disclosure.

This application claims the priority of Chinese Patent Application No. 202010716041.6, entitled "METHOD AND SYSTEM FOR MANUFACTURING A HEAT EXCHANGER FOR SUPERCRITICAL PRESSURE FLUID" filed with the China National Intellectual Property Administration on July 23, 2020.

**Claims**

1. A method for manufacturing a heat exchanger for supercritical pressure fluid, wherein the heat exchanger has a first working fluid arranged in hot fluid passages of the heat exchanger, and a second working fluid arranged in cold fluid passages of the heat exchanger, the method comprising following steps:

receiving boundary conditions of the heat exchanger (101), the boundary conditions comprising first working fluid parameters and second working fluid parameters, the first working fluid parameters comprising an inlet temperature, an outlet temperature, a pressure and a flow of the first working fluid, the second working fluid parameters comprising an inlet temperature, an outlet temperature, a pressure and a flow of the second working fluid;

adjusting a preliminary framework of the heat exchanger based on the boundary conditions (102), the preliminary framework of the heat exchanger comprising a passage equivalent diameter, a passage length, a passage number, and arrangements of cold fluid passages and hot fluid passages of the heat exchanger,

wherein the adjusting a preliminary framework of the heat exchanger based on the boundary conditions (102) comprising:

determining an average Nusselt number according to the first working fluid parameters and the second working fluid parameters;

determining a first average convective heat transfer coefficient of the first working fluid and a second average convective heat transfer coefficient of the second working fluid respectively and determining the passage equivalent diameter according to the average Nusselt number;

determining a total heat transfer coefficient according to the first average convective heat transfer coefficient and the second average convective heat transfer coefficient;

determining a heat transfer quantity according to the total heat transfer coefficient;

determining the passage length and the passage number according to the heat transfer quantity;

determining the arrangements of cold fluid passages and hot fluid passages according to the passage length and the passage number;

determining the preliminary framework of the heat exchanger according to the passage equivalent diameter, the passage length, the passage number, and the arrangements of cold fluid passages and hot fluid passages;

wherein the determining an average Nusselt number according to the first working fluid parameters and the second working fluid parameters comprising:

calculating a logarithmic mean temperature difference by a following expression according to the inlet and outlet temperatures of the first working fluid and the second working fluid;

$$\Delta t_m = \frac{\Delta t' - \Delta t''}{ln\frac{\Delta t'}{\Delta t''}}$$

$$(1)$$

wherein, $\Delta t'$ is a difference value between an inlet temperature of a working fluid at a hot side and an outlet temperature of a working fluid at a cold side, $\Delta t''$ is a difference value between an outlet temperature of the working fluid at the hot side and inlet temperature of the working fluid at the cold side, determining physical property parameters of the working fluids at qualitative temperature, such as density $\rho$, dynamic viscosity $\mu$, thermal conductivity $\lambda$ via the inlet and outlet temperatures and pressure information of the working fluids at the two sides of the heat exchanger, calculating criterion numbers such as an average Reynolds number $Re_b$ of the main flow and a Prandtl Number $Pr$, and calculating the average Nusselt number $Nu_0$ by following criteria correlation equation:

$$Nu_0 = \frac{(\xi/8)\,Re_b\,\overline{Pr}}{12.7\sqrt{\xi/8}\left(Pr^{2/3}-1\right)+1.07} \;,\; \xi = \frac{1}{(1.82\,log_{10}Re_b-1.64)^2}$$

$$(2)$$

wherein, $\overline{Pr}$ is the average Prandtl Number, $\xi$ is a friction factor,
wherein determining the preliminary framework of the heat exchanger comprising:

calculating the average convective heat transfer coefficients of working fluids in the passages at two sides of the heat transfer unit:

$$h_h = \frac{Nu_{0h}\lambda_h}{d}, \quad h_c = \frac{Nu_{0c}\lambda_c}{d} \tag{3}$$

wherein, subscripts h and c respectively represent the fluids at hot and cold sides, and $d$ is the equivalent diameter of flow passage,
obtaining a total heat transfer coefficient $k$ by following expression:

$$k = \frac{1}{\frac{1}{h_h} + \frac{\delta}{\lambda} + \frac{1}{h_c}} \tag{4}$$

wherein $\lambda$ is a thermal conductivity of a metal plate between the cold and hot flow passages, and $\delta$ is an average thickness of the plate,
obtaining the heat flux by the total heat transfer coefficient and the logarithmic mean temperature difference:

$$q = k\Delta t_m \tag{5}$$

calculating the total heat transfer area $A$ according to the heat transfer amount $q$ and the heat flux, calculating a per unit flow passage length $L$ according to the number of the flow passage $N$ and a per unit heat transfer surface area of the flow passage:

$$A = \frac{\Phi}{q} \tag{6}$$

$$l = \frac{A}{2N(\pi+2)R} \tag{7};$$

dividing each of fluid passages along a fluid flow direction and establishing a thermal equilibrium control model for each divided fluid passage based on the preliminary framework of the heat exchanger (103), the fluid passages comprising the hot fluid passages and the cold fluid passages; each of the fluid passages comprising a plurality of the divided fluid passages,
wherein the thermal equilibrium control model being as follows:

$$q_i = q_{m\_hi} c_{p\_hi}(t_{hi} - t_{hi+1})$$

$$q_i = q_{m\_ci} c_{p\_ci}(t_{ci} - t_{ci+1})$$

$$q_i = k_i A_i (t_{m\_hi} - t_{m\_ci});$$

wherein $q_i$ is a heat flux in a *i-th* divided fluid passage; $q_{m\_ci}$ is a flow of a cold fluid; $q_{m\_hi}$ is a flow of a hot fluid; $c_{p\_hi}$ is a specific heat capacity at constant pressure of the hot fluid; $c_{p\_ci}$ is a specific heat capacity at constant pressure of the cold fluid; $t_{m\_ci}$ is a temperature of the first working fluid at a central node of the *i-th* divided fluid passage; $t_{m\_hi}$ is a temperature of the second working fluid at the central node of the *i-th* divided fluid passage; $A_i$ is a heat transfer area in the *i-th* divided fluid passage; i represents the *i-th* divided fluid passage, and *i+1* represents a next divided fluid passage relative to the *i-th* divided fluid passage;

constructing a machine heat transfer model in combination with a Gaussian regression process and a Cokriging method based on the thermal equilibrium control model (104), comprising:

obtaining heat transfer data of the supercritical pressure fluid, the heat transfer data of the supercritical pressure fluid comprising second precision heat transfer data and first precision heat transfer data, the second precision heat transfer data being a data set obtained from experiment or numerical simulation data; the first precision heat transfer data being a data set predicted by dimensionless criterion correlation equation, the heat transfer data of the supercritical pressure fluid being an on-way flow rate of the fluid, a wall surface temperature, a temperature of a main flow of the fluid, a fluid pressure, a convective heat transfer coefficient and a passage characteristic length;

preprocessing the heat transfer data of the supercritical pressure fluid and determining preprocessed heat transfer data of supercritical pressure fluid, the preprocessed heat transfer datum of the supercritical pressure fluid comprising preprocessed first precision heat transfer data and preprocessed second precision heat transfer data;

determining a first precision model according to the preprocessed first precision heat transfer data based on a Gaussian regression equation;

determining a second precision model according to the preprocessed second precision heat transfer data based on the Gaussian regression equation;

determining a multi-precision model according to the first precision heat transfer data, the first precision model, the second precision heat transfer data and the second precision model by utilizing the Cokriging method based on the thermal equilibrium control model, the multi-precision model being a machine heat transfer model which takes dimensionless parameters of screened heat transfer data of the supercritical pressure fluid as an input and takes the convective heat transfer coefficient as an output, the screened heat transfer data of the supercritical pressure fluid comprising the on-way flow rate of the fluid, the wall surface temperature, the temperature of the main flow of the fluid, the fluid pressure, the convective heat transfer coefficient and the passage characteristic length, the machine heat transfer model being used for determining on-way thermal parameters about the working fluid flowing and transferring heat in the fluid passages,

wherein the determining a multi-precision model according to the first precision heat transfer data, the first precision model, the second precision heat transfer data and the second precision model by utilizing the Cokriging method comprising:

dividing the second precision heat transfer data into a training set and a testing set;

determining the multi-precision model according to a formula;

$$\hat{f}_2(X) = \rho(X)\check{\hat{f}}_1(X) + \delta(X)$$ by utilizing the training set, wherein $\hat{f}_2(X)$ is a second precision model; $\hat{f}_1(X)$ is a first precision model; $\rho(X)$ is a scale factor for quantifying a relationship between outputs of the second precision model and the first precision model; $\delta(X)$ is a Gaussian process;

determining convective heat transfer coefficients about the working fluids flowing and transferring heat in the fluid passages according to the machine heat transfer model (105);

determining a heat transfer area according to the convective heat transfer coefficients (106);

determining whether the heat transfer area meets a target heat transfer area, to obtain a first determination result (107);

manufacturing the heat exchanger according to the preliminary framework of the heat exchanger, when the first determination result indicates that the heat transfer area meets the target heat transfer area (108)

readjusting the preliminary framework of the heat exchanger for repeating the above steps until the heat transfer area meets the target heat transfer area, when the first determination result indicates that the heat transfer area fails to meet the target heat transfer area, and manufacturing the heat exchanger according to the preliminary framework of the heat exchanger (109).

2. A system for manufacturing a heat exchanger for supercritical pressure fluid, comprising a first working fluid arranged in hot fluid passages of the heat exchanger and a second working fluid arranged in cold fluid passages of the heat exchanger, the system comprising:

a module for obtaining boundary conditions (301), configured for receiving the boundary conditions of the heat exchanger, the boundary conditions comprising first working fluid parameters and second working fluid parameters, the first working fluid parameters comprising an inlet temperature, an outlet temperature, a pressure and a flow of the first working fluid, the second working fluid parameters comprising an inlet temperature, an outlet temperature, a pressure and a flow of the second working fluid;

a module for adjusting a preliminary framework of the heat exchanger (302), configured for adjusting the preliminary framework of the heat exchanger based on the boundary conditions, the preliminary framework of the heat exchanger comprising a passage equivalent diameter, a passage length, a passage number, and arrangements of cold fluid passages and hot fluid passages of the heat exchanger, comprising:

an unit for determining an average Nusselt number, configured for determining an average Nusselt number according to the first working fluid parameters and the second working fluid parameters;

an unit for determining the passage equivalent diameter, configured for determining a first average convective heat transfer coefficient of the first working fluid and a second average convective heat transfer coefficient of the second working fluid respectively and determining the passage equivalent diameter according to the average Nusselt number;

an unit for determining a total heat transfer coefficient, configured for determining the total heat transfer coefficient according to the first average convective heat transfer coefficient and the second average convective heat transfer coefficient;

an unit for determining a heat transfer quantity, configured for determining the heat transfer quantity according to the total heat transfer coefficient;

an unit for determining the passage length and the passage number, configured for determining the passage length and the passage number according to the heat transfer quantity;

an unit for determining the arrangements of cold fluid passages and hot fluid passages, configured for determining the arrangements of cold fluid passages and hot fluid passages according to the passage length and the passage number;

an unit for determining the preliminary framework of the heat exchanger, configured for determining the preliminary framework of the heat exchanger according to the passage equivalent diameter, the passage length, the passage number, and the arrangements of cold fluid passages and hot fluid passages,

wherein determining an average Nusselt number according to the first working fluid parameters and the second working fluid parameters comprising:

calculating a logarithmic mean temperature difference by a following expression according to the inlet and outlet temperatures of the first working fluid and the second working fluid;

$$\Delta t_m = \frac{\Delta t' - \Delta t''}{ln\frac{\Delta t'}{\Delta t''}} \tag{1}$$

wherein, $\Delta t'$ is a difference value between an inlet temperature of a working fluid at a hot side and an outlet temperature of a working fluid at a cold side, $\Delta t''$ is a difference value between an outlet temperature of the working fluid at the hot side and inlet temperature of the working fluid at the cold side, determining physical property parameters of the working fluids at qualitative temperature, such as density $\rho$, dynamic viscosity $\mu$, thermal conductivity $\lambda$ via the inlet and outlet temperatures and pressure information of the working fluids at the two sides of the heat exchanger, calculating criterion numbers such as an average Reynolds number $Re_b$ of the main flow and a Prandtl Number $Pr$, and calculating the average Nusselt number $Nu_0$ by following criteria correlation equation:

$$Nu_0 = \frac{(\xi/8)\, Re_b\, \overline{Pr}}{12.7\sqrt{\xi/8}\left(\overline{Pr^{2/3}}-1\right)+1.07} \;,\; \xi = \frac{1}{(1.82\, log_{10}Re_b - 1.64)^2} \tag{2}$$

wherein, $\overline{Pr}$ is the average Prandtl Number, $\xi$ is a friction factor,
wherein determining the preliminary framework of the heat exchanger comprising:

calculating the average convective heat transfer coefficients of working fluids in the passages at two sides of the heat transfer unit:

$$h_h = \frac{Nu_{0h}\lambda_h}{d}, \ h_c = \frac{Nu_{0c}\lambda_c}{d} \tag{3}$$

wherein, subscripts h and c respectively represent the fluids at hot and cold sides, and $d$ is the equivalent diameter of flow passage,
obtaining a total heat transfer coefficient k by following expression:

$$k = \frac{1}{\frac{1}{h_h}+\frac{\delta}{\lambda}+\frac{1}{h_c}} \tag{4}$$

wherein $\lambda$ is a thermal conductivity of a metal plate between the cold and hot flow passages, and $\delta$ is an average thickness of the plate,
obtaining the heat flux by the total heat transfer coefficient and the logarithmic mean temperature difference:

$$q = k\Delta t_m \tag{5}$$

calculating the total heat transfer area $A$ according to the heat transfer amount q and the heat flux, calculating a per unit flow passage length $L$ according to the number of the flow passage $N$ and a per unit heat transfer surface area of the flow passage:

$$A = \frac{\Phi}{q} \tag{6}$$

$$l = \frac{A}{2N(\pi+2)R} \tag{7};$$

a module for establishing a thermal equilibrium control model (303), configured for dividing each of fluid passages along a fluid flow direction and establishing a thermal equilibrium control model for each divided fluid passage based on the preliminary framework of the heat exchanger, the fluid passages comprising hot fluid passages and cold fluid passages, each of the fluid passages comprising a plurality of the divided fluid passages, comprising:

an unit for establishing a thermal equilibrium control model, configured for establishing a thermal equilibrium control model, and the thermal equilibrium control model being as follows:

$$q_i = q_{m\_hi}c_{p\_hi}(t_{hi} - t_{hi+1})$$

$$q_i = q_{m\_ci}c_{p\_ci}(t_{ci} - t_{ci+1})$$

$$q_i = k_iA_i(t_{m\_hi} - t_{m\_ci});$$

wherein $q_i$ is a heat flux in a *i-th* divided fluid passages; $q_{m\_ci}$ is a flow of a cold fluid; $q_{m\_hi}$ is a flow of a hot fluid; $c_{p\_hi}$ is a specific heat capacity at constant pressure of the hot fluid; $c_{p\_ci}$ is a specific heat capacity at constant pressure of the cold fluid; $t_{m\_ci}$ is a temperature of the first working fluid at a central node of the *i-th* divided fluid passages; $t_{m\_hi}$ is a temperature of the second working fluid at the central node of the *i-th* divided fluid passages; $A_i$ is a heat transfer area in the *i-th* divided fluid passage; i represents the *i-th* divided fluid passages; and *i+1* represents a next divided fluid passage relative to the *i-th* divided fluid passage;

a module for constructing a machine heat transfer model (304), configured for constructing the machine heat transfer model in combination with a Gaussian regression process and a Cokriging method based on the thermal equilibrium control model, comprising:

> a module for obtaining heat transfer data of the supercritical pressure fluid, configured for obtaining the heat transfer data of the supercritical pressure fluid, the heat transfer data of the supercritical pressure fluid comprising second precision heat transfer data and first precision heat transfer data, the second precision heat transfer data being a data set obtained from experiment or numerical simulation data, the first precision heat transfer data being a data set predicted by dimensionless criterion correlation equation, the heat transfer data of the supercritical pressure fluid being an on-way flow rate of the fluid, a wall surface temperature, a temperature of a main flow of the fluid, a fluid pressure, a convective heat transfer coefficient and a passage characteristic length;
>
> a preprocessing module, configured for preprocessing the heat transfer data of the supercritical pressure fluid and determining preprocessed heat transfer data of the supercritical pressure fluid, the preprocessed heat transfer datum of the supercritical pressure fluid comprising preprocessed first precision heat transfer data and preprocessed second precision heat transfer data;
>
> a module for determining a low-precision model, configured for determining the first precision model according to the preprocessed first precision heat transfer data based on a Gaussian regression equation;
>
> a module for determining a high-precision model, configured for determining a second precision model according to the preprocessed second precision heat transfer data based on the Gaussian regression equation, wherein the first precision heat transfer data has a lower precision than that of the second precision heat transfer data;
>
> a module for determining a multi-precision model, configured for determining the multi-precision model according to the first precision heat transfer data, the first precision model, the second precision heat transfer data and the second precision model by utilizing a Cokriging method based on the thermal equilibrium control model, the multi-precision model being a machine heat transfer model which takes dimensionless parameters of screened heat transfer data of the supercritical pressure fluid as an input and takes the convective heat transfer coefficient as an output, the screened heat transfer data of the supercritical pressure fluid comprising the on-way flow rate of the fluid, the wall surface temperature, the temperature of the main flow of the fluid, the fluid pressure, and the passage characteristic length, the machine heat transfer model being used for determining the on-way thermal parameters about the working fluid flowing and transferring heat in the fluid passages,
>
> wherein the module for determining a multi-precision model according to the first precision heat transfer data, the first precision model, the second precision heat transfer data and the second precision model by utilizing the Cokriging method comprising:
>
> > a dividing unit, configured for dividing the second precision heat transfer data into a training set and a testing set;
> >
> > an unit for determining a multi-precision model, configured for determining a multi-precision model according to a formula: $$\widehat{f}_2(X) = \rho(X)\widehat{f}_1(X) + \delta(X)$$ by utilizing the training set, wherein $\widehat{f}_2(X)$ is a second precision model; $\widehat{f}_1(X)$ is a first precision model; $\rho(X)$ is a scale factor for quantifying a relationship between outputs of the second precision model and the first precision model; $\delta(X)$ is a Gaussian process;

a module for determining on-way thermal parameters (305), configured for determining convective heat transfer coefficients about the working fluids flowing and transferring heat in the fluid passages according to the machine heat transfer model, the on-way thermal parameters comprising a fluid temperature, a fluid velocity and a pressure loss;

a module for determining a heat transfer area (306), configured for determining the heat transfer area according to the convective heat transfer coefficients;

a first determination module (307), configured for determining whether the heat transfer area meets a target heat transfer area to obtain a first determination result;

a module for manufacturing the heat exchanger (308), configured for instructing to manufacture the heat exchanger according to the preliminary framework of the heat exchanger, when the first determination result indicates that the heat transfer area meets the target heat transfer area; and

a module for adjusting the preliminary framework of the heat exchanger (309), configured for readjusting the preliminary framework of the heat exchanger for repeating the above steps until the heat transfer area meets the target heat transfer area, when the first determination result indicates that the heat transfer area fails to meet the target heat transfer area and instructing to manufacture the heat exchanger according to a readjusted preliminary framework of the heat exchanger.

**Patentansprüche**

1. Verfahren zur Herstellung eines Wärmetauschers für überkritisches Druckfluid, wobei der Wärmetauscher ein erstes Arbeitsfluid, das in Heißfluidkanälen des Wärmetauschers angeordnet ist, und ein zweites Arbeitsfluid, das in Kaltfluidkanälen des Wärmetauschers angeordnet ist, aufweist, wobei das Verfahren die folgenden Schritte umfasst:

   Erhalten von Randbedingungen des Wärmetauschers (101), wobei die Randbedingungen erste Arbeitsfluidparameter und zweite Arbeitsfluidparameter umfassen, wobei die ersten Arbeitsfluidparameter eine Einlasstemperatur, eine Auslasstemperatur, einen Druck und einen Durchfluss des ersten Arbeitsfluids umfassen, wobei die zweiten Arbeitsfluidparameter eine Einlasstemperatur, eine Auslasstemperatur, einen Druck und einen Durchfluss des zweiten Arbeitsfluids umfassen;
   Anpassen eines vorläufigen Aufbaus des Wärmetauschers basierend auf den Randbedingungen (102), wobei der vorläufige Aufbau des Wärmetauschers einen Kanaläquivalentdurchmesser, eine Kanallänge, eine Kanalanzahl und Anordnungen von Kaltfluidkanälen und Heißfluidkanälen des Wärmetauschers umfasst,
   wobei das Anpassen eines vorläufigen Aufbaus des Wärmetauschers basierend auf den Randbedingungen (102) umfasst:

      Bestimmen einer durchschnittlichen Nußelt-Zahl gemäß den ersten Arbeitsfluidparametern und den zweiten Arbeitsfluidparametern;
      Bestimmen eines ersten durchschnittlichen konvektiven Wärmeübertragungskoeffizienten des ersten Arbeitsfluids beziehungsweise eines zweiten durchschnittlichen konvektiven Wärmeübertragungskoeffizienten des zweiten Arbeitsfluids und Bestimmen des Kanaläquivalentdurchmessers gemäß der durchschnittlichen Nußelt-Zahl;
      Bestimmen eines Gesamtwärmeübertragungskoeffizienten gemäß dem ersten durchschnittlichen konvektiven Wärmeübertragungskoeffizienten und dem zweiten durchschnittlichen konvektiven Wärmeübertragungskoeffizienten;
      Bestimmen einer Wärmeübertragungsmenge gemäß dem Gesamtwärmeübertragungskoeffizienten;
      Bestimmen der Kanallänge und der Kanalanzahl gemäß der Wärmeübertragungsmenge;
      Bestimmen der Anordnungen von Kaltfluidkanälen und Heißfluidkanälen gemäß der Kanallänge und der Kanalanzahl;
      Bestimmen des vorläufigen Aufbaus des Wärmetauschers gemäß dem Kanaläquivalentdurchmesser, der Kanallänge, der Kanalanzahl und der Anordnungen der Kaltfluidkanäle und Heißfluidkanäle;
      wobei das Bestimmen einer durchschnittlichen Nußelt-Zahl gemäß den ersten Arbeitsfluidparametern und den zweiten Arbeitsfluidparametern umfasst:

         Berechnen einer logarithmischen mittleren Temperaturdifferenz durch folgenden Term gemäß der Einlasstemperatur und der Auslasstemperatur des ersten Arbeitsfluids und des zweiten Arbeitsfluids;

$$\Delta t_m = \frac{\Delta t' - \Delta t''}{ln\frac{\Delta t'}{\Delta t''}}$$

$$(1)$$

wobei $\Delta t'$ ein Differenzwert zwischen einer Einlasstemperatur eines Arbeitsfluids an einer heißen Seite und einer Auslasstemperatur eines Arbeitsfluids an einer kalten Seite ist, wobei $\Delta t''$ ein Differenzwert zwischen einer Auslasstemperatur des Arbeitsfluids an der heißen Seite und einer Einlasstemperatur des Arbeitsfluids an der kalten Seite ist,

Bestimmen der physikalischen Eigenschaftsparameter der Arbeitsfluide bei qualitativer Temperatur, wie Dichte $\rho$, dynamische Viskosität $\mu$, Wärmeleitfähigkeit $\lambda$, über die Einlass- und Auslasstemperaturen und Druckinformationen der Arbeitsfluide an den beiden Seiten des Wärmetauschers, Berechnen von Kennzahlen wie einer durchschnittlichen Reynolds-Zahl $Re_b$ des Hauptdurchflusses und einer Prandtl-Zahl Pr und Berechnen der durchschnittlichen Nußelt-Zahl $Nu_0$ anhand der folgenden Kennwert-Korrelationsgleichung:

$$Nu_0 = \frac{(\xi/8)\,Re_b\,\overline{Pr}}{12.7\sqrt{\xi/8}\left(Pr^{2/3}-1\right)+1.07}\ ,\quad \xi = \frac{1}{(1.82\,log_{10}Re_b-1.64)^2}$$

$$(2)$$

wobei $\overline{Pr}$ die durchschnittliche Prandtl-Zahl ist, wobei $\xi$ ein Reibungsfaktor ist,
wobei das Bestimmen des vorläufigen Aufbaus des Wärmetauschers umfasst:

Berechnen der durchschnittlichen konvektiven Wärmeübertragungskoeffizienten von Arbeitsfluiden in den Kanälen an zwei Seiten der Wärmetauschereinheit:

$$h_h = \frac{Nu_{0h}\lambda_h}{d}\ ,\quad h_c = \frac{Nu_{0c}\lambda_c}{d}$$

$$(3)$$

wobei die Indizes h und c die Fluide auf der heißen beziehungsweise kalten Seite darstellen und $d$ der Kanaläquivalentdurchmesser ist,
Ermitteln des Gesamtwärmeübertragungskoeffizienten $k$ durch folgenden Term:

$$k = \frac{1}{\frac{1}{h_h}+\frac{\delta}{\lambda}+\frac{1}{h_c}}$$

$$(4)$$

wobei $\lambda$ die Wärmeleitfähigkeit einer Metallplatte zwischen den Kanälen für den kalten und den heißen Durchfluss ist und $\delta$ die durchschnittliche Dicke der Platte ist,
Ermitteln des Wärmestroms durch den Gesamtwärmeübertragungskoeffizienten und die logarithmische mittlere Temperaturdifferenz:

$$q = k\Delta t_m$$

$$(5)$$

Berechnen der gesamten Wärmeübertragungsfläche A gemäß der Wärmeübertragungsmenge q und dem Wärmestrom, Berechnen einer Durchflusskanallänge L pro Einheit gemäß der Anzahl der Durchflusskanäle N und einer Wärmeübertragungsfläche des Durchflusskanals pro Einheit:

$$A = \frac{\Phi}{q}$$

$$(6)$$

$$l = \frac{A}{2N(\pi+2)R} \tag{7};$$

Unterteilen jedes der Fluidkanäle entlang einer Durchflussrichtung und Erstellen eines Modells zur Steuerung des thermischen Gleichgewichts für jeden unterteilten Fluidkanal basierend auf dem vorläufigen Aufbau des Wärmetauschers (103), wobei die Fluidkanäle die Heißfluidkanäle und die Kaltfluidkanäle umfassen; wobei jeder der Fluidkanäle eine Vielzahl der unterteilten Fluidkanäle umfasst,

wobei das Modell zur Steuerung des thermischen Gleichgewichts wie folgt lautet:

$$q_i = q_{m\_hi} c_{p\_hi}(t_{hi} - t_{hi+1})$$

$$q_i = q_{m\_ci} c_{p\_ci}(t_{ci} - t_{ci+1})$$

$$q_i = k_i A_i(t_{m\_hi} - t_{m\_ci});$$

wobei $q_i$ ein Wärmestrom in einem *i-ten* unterteilten Fluidkanal ist; $q_{m\_ci}$ ein Durchfluss eines kalten Fluids ist; $q_{m\_hi}$ ein Durchfluss eines heißen Fluids ist; $c_{p\_hi}$ eine spezifische Wärmekapazität bei konstantem Druck des heißen Fluids ist; $c_{p\_ci}$ eine spezifische Wärmekapazität bei konstantem Druck des kalten Fluids ist; $t_{m\_ci}$ eine Temperatur des ersten Arbeitsfluids an einem Zentralknoten des *i-ten* unterteilten Fluidkanals ist; $t_{m\_hi}$ eine Temperatur des zweiten Arbeitsfluids an dem Zentralknoten des *i-ten* unterteilten Fluidkanals ist; $A_i$ eine Wärmeübertragungsfläche in dem *i-ten* unterteilten Fluidkanal ist; *i* den *i-ten* unterteilten Fluidkanal darstellt und *i+1* einen nächsten unterteilten Fluidkanal relativ zu dem *i-ten* unterteilten Fluidkanal darstellt;

Konstruieren eines Maschinen-Wärmeübertragungsmodells in Kombination mit einem Gaußschen Regressionsverfahren und einem Cokriging-Verfahren, basierend auf dem Modell zur Steuerung des thermischen Gleichgewichts (104), umfassend:

Ermitteln von Wärmeübertragungsdaten des überkritischen Druckfluids, wobei die Wärmeübertragungsdaten des überkritischen Druckfluids Wärmeübertragungsdaten zweiter Genauigkeit und Wärmeübertragungsdaten erster Genauigkeit umfassen, wobei die Wärmeübertragungsdaten zweiter Genauigkeit ein Datensatz sind, der aus experimentellen oder numerischen Simulationsdaten ermittelt wird; wobei die Wärmeübertragungsdaten erster Genauigkeit ein Datensatz sind, der durch eine dimensionslose Kennwert-Korrelationsgleichung vorhergesagt wird, wobei die Wärmeübertragungsdaten des überkritischen Druckfluids eine Einweg-Durchflussrate des Fluids, eine Wandoberflächentemperatur, eine Temperatur eines Hauptdurchflusses des Fluids, ein Fluiddruck, ein konvektiver Wärmeübertragungskoeffizient und eine charakteristische Kanallänge sind;

Vorverarbeiten der Wärmeübertragungsdaten des überkritischen Druckfluids und Bestimmen vorverarbeiteter Wärmeübertragungsdaten des überkritischen Druckfluids, wobei die vorverarbeiteten Wärmeübertragungsdaten des überkritischen Druckfluids vorverarbeitete Wärmeübertragungsdaten erster Genauigkeit und vorverarbeitete Wärmeübertragungsdaten zweiter Genauigkeit umfassen;

Bestimmen eines Modells erster Genauigkeit gemäß den vorverarbeiteten Wärmeübertragungsdaten erster Genauigkeit basierend auf einer Gaußschen Regressionsgleichung;

Bestimmen eines Modells zweiter Genauigkeit gemäß den vorverarbeiteten Wärmeübertragungsdaten zweiter Genauigkeit basierend auf der Gaußschen Regressionsgleichung;

Bestimmen eines Modells mit mehreren Genauigkeiten gemäß den Wärmeübertragungsdaten erster Genauigkeit, dem Modell erster Genauigkeit, den Wärmeübertragungsdaten zweiter Genauigkeit und dem Modell zweiter Genauigkeit durch Anwendung des Cokriging-Verfahrens basierend auf dem Modell zur Steuerung des thermischen Gleichgewichts, wobei das Modell mit mehreren Genauigkeiten ein Maschinen-Wärmeübertragungsmodell ist, das dimensionslose Parameter von abgeschirmten Wärmeübertragungsdaten des überkritischen Druckfluids als Eingangsgröße und den konvektiven Wärmeübertragungskoeffizienten als Ausgangsgröße nimmt, wobei die abgeschirmten Wärmeübertragungsdaten des überkritischen Druckfluids die Einweg-Durchflussrate des Fluids, die Wandoberflächentemperatur, die Temperatur des Hauptdurchflusses des Fluids, den Fluiddruck, den konvektiven Wärmeübertragungskoeffizienten und die charakteristische Kanallänge umfassen, wobei das Maschinen-Wärmeübertragungsmodell zum Bestimmen von Einweg-Wärmeparametern über das Arbeitsfluid verwendet wird, das in den Fluidkanälen fließt und Wärme überträgt,

wobei das Bestimmen eines Modells mit mehreren Genauigkeiten gemäß den Wärmeübertragungsdaten erster Genauigkeit, dem Modell erster Genauigkeit, den Wärmeübertragungsdaten zweiter Genauigkeit und dem Modell zweiter Genauigkeit durch Verwendung des Cokriging-Verfahrens umfasst:

Unterteilen der Wärmeübertragungsdaten zweiter Genauigkeit in einen Trainingssatz und einen Testsatz;
Bestimmen des Modells mit mehreren Genauigkeiten gemäß einer Formel:

$$\hat{f}_2(X) = \rho(X)\hat{f}_1(X) + \delta(X)$$

durch Verwendung des Trainingssatzes, wobei $\hat{f}_2(X)$ ein Modell zweiter Genauigkeit ist; $\hat{f}_1(X)$ ein Modell erster Genauigkeit ist; $\rho(X)$ ein Skalierungsfaktor zur Quantifizierung einer Beziehung zwischen Ausgangsgrößen des Modells zweiter Genauigkeit und des Modells erster Genauigkeit ist; $\delta(X)$ ein Gauß-Prozess ist;
Bestimmen der konvektiven Wärmeübertragungskoeffizienten der Arbeitsfluide, die in den Fluidkanälen gemäß dem Maschinen-Wärmeübertragungsmodell (105) fließen und Wärme übertragen;
Bestimmen einer Wärmeübertragungsfläche gemäß den konvektiven Wärmeübertragungskoeffizienten (106);
Bestimmen, ob die Wärmeübertragungsfläche einer Ziel-Wärmeübertragungsfläche entspricht, um ein erstes Bestimmungsergebnis (107) zu erhalten;
Herstellung des Wärmetauschers gemäß dem vorläufigen Aufbau des Wärmetauschers, wenn das erste Bestimmungsergebnis anzeigt, dass die Wärmeübertragungsfläche der Ziel-Wärmeübertragungsfläche entspricht (108);
Neuanpassen des vorläufigen Aufbaus des Wärmetauschers zur Wiederholung der obigen Schritte, bis die Wärmeübertragungsfläche der Ziel-Wärmeübertragungsfläche entspricht, wenn das erste Bestimmungsergebnis anzeigt, dass die Wärmeübertragungsfläche der Ziel-Wärmeübertragungsfläche nicht entspricht, und Herstellung des Wärmetauschers gemäß dem vorläufigen Aufbau des Wärmetauschers (109).

2. Vorrichtung zur Herstellung eines Wärmetauschers für überkritisches Druckfluid, umfassend ein erstes Arbeitsfluid, das in Heißfluidkanälen des Wärmetauschers angeordnet ist, und ein zweites Arbeitsfluid, das in Kaltfluidkanälen des Wärmetauschers angeordnet ist, wobei die Vorrichtung umfasst:

ein Modul zum Ermitteln von Randbedingungen (301), ausgebildet zum Erhalten der Randbedingungen des Wärmetauschers, wobei die Randbedingungen erste Arbeitsfluidparameter und zweite Arbeitsfluidparameter umfassen, wobei die ersten Arbeitsfluidparameter eine Einlasstemperatur, eine Auslasstemperatur, einen Druck und einen Durchfluss des ersten Arbeitsfluids umfassen, wobei die zweiten Arbeitsfluidparameter eine Einlasstemperatur, eine Auslasstemperatur, einen Druck und einen Durchfluss des zweiten Arbeitsfluids umfassen;
ein Modul zum Anpassen eines vorläufigen Aufbaus des Wärmetauschers (302), ausgebildet zum Anpassen des vorläufigen Aufbaus des Wärmetauschers basierend auf den Randbedingungen, wobei der vorläufige Aufbau des Wärmetauschers einen Kanaläquivalentdurchmesser, eine Kanallänge, eine Kanalanzahl und Anordnungen von Kaltfluidkanälen und Heißfluidkanälen des Wärmetauschers umfasst, umfassend:

eine Einrichtung zum Bestimmen einer durchschnittlichen Nußelt-Zahl, ausgebildet zum Bestimmen einer durchschnittlichen Nußelt-Zahl gemäß den ersten Arbeitsfluidparametern und den zweiten Arbeitsfluidparametern;
eine Einrichtung zum Bestimmen des Kanaläquivalentdurchmessers, ausgebildet zum Bestimmen eines ersten durchschnittlichen konvektiven Wärmeübertragungskoeffizienten des ersten Arbeitsfluids beziehungsweise eines zweiten durchschnittlichen konvektiven Wärmeübertragungskoeffizienten des zweiten Arbeitsfluids und zum Bestimmen des Kanaläquivalentdurchmessers gemäß der durchschnittlichen Nußelt-Zahl;

eine Einrichtung zum Bestimmen eines Gesamtwärmeübertragungskoeffizienten, ausgebildet zum Bestimmen des Gesamtwärmeübertragungskoeffizienten gemäß dem ersten durchschnittlichen konvektiven Wärmeübertragungskoeffizienten und dem zweiten durchschnittlichen konvektiven Wärmeübertragungskoeffizienten;

eine Einrichtung zum Bestimmen einer Wärmeübertragungsmenge, ausgebildet zum Bestimmen der Wärmeübertragungsmenge gemäß dem Gesamtwärmeübertragungskoeffizienten;

eine Einrichtung zum Bestimmen der Kanallänge und der Kanalanzahl, ausgebildet zum Bestimmen der Kanallänge und der Kanalanzahl gemäß der Wärmeübertragungsmenge;

eine Einrichtung zum Bestimmen der Anordnungen von Kaltfluidkanälen und Heißfluidkanälen, ausgebildet zum Bestimmen der Anordnungen von Kaltfluidkanälen und Heißfluidkanälen gemäß der Kanallänge und der Kanalanzahl;

eine Einrichtung zum Bestimmen des vorläufigen Aufbaus des Wärmetauschers, ausgebildet zum Bestimmen des vorläufigen Aufbaus des Wärmetauschers gemäß dem Kanaläquivalentdurchmesser, der Kanallänge, der Kanalanzahl und der Anordnungen der Kaltfluidkanäle und Heißfluidkanäle;

wobei das Bestimmen einer durchschnittlichen Nußelt-Zahl gemäß den ersten Arbeitsfluidparametern und den zweiten Arbeitsfluidparametern umfasst:

Berechnen einer logarithmischen mittleren Temperaturdifferenz durch folgenden Term gemäß der Einlasstemperatur und der Auslasstemperatur des ersten Arbeitsfluids und des zweiten Arbeitsfluids;

$$\Delta t_m = \frac{\Delta t' - \Delta t''}{ln\frac{\Delta t'}{\Delta t''}} \tag{1}$$

wobei $\Delta t'$ ein Differenzwert zwischen einer Einlasstemperatur eines Arbeitsfluids an einer heißen Seite und einer Auslasstemperatur eines Arbeitsfluids an einer kalten Seite ist, wobei $\Delta t''$ ein Differenzwert zwischen einer Auslasstemperatur des Arbeitsfluids an der heißen Seite und einer Einlasstemperatur des Arbeitsfluids an der kalten Seite ist,

Bestimmen der physikalischen Eigenschaftsparameter der Arbeitsfluide bei qualitativer Temperatur, wie Dichte $\rho$, dynamische Viskosität $\mu$, Wärmeleitfähigkeit $\lambda$, über die Einlass- und Auslasstemperaturen und Druckinformationen der Arbeitsfluide an den beiden Seiten des Wärmetauschers, Berechnen von Kennzahlen wie einer durchschnittlichen Reynolds-Zahl $Re_b$ des Hauptdurchflusses und einer Prandtl-Zahl Pr und Berechnen der durchschnittlichen Nußelt-Zahl $Nu_0$ anhand der folgenden Kennwert-Korrelationsgleichung:

$$Nu_0 = \frac{(\xi/8)\,Re_b\,\overline{Pr}}{12.7\sqrt{\xi/8}\left(\overline{Pr^{2/3}}-1\right)+1.07}\,,\ \xi = \frac{1}{(1.82\,log_{10}Re_b-1.64)^2} \tag{2}$$

wobei $\overline{Pr}$ die durchschnittliche Prandtl-Zahl ist, wobei $\xi$ ein Reibungsfaktor ist,

wobei das Bestimmen des vorläufigen Aufbaus des Wärmetauschers umfasst:

Berechnen der durchschnittlichen konvektiven Wärmeübertragungskoeffizienten von Arbeitsfluiden in den Kanälen an zwei Seiten der Wärmetauschereinheit:

$$h_h = \frac{Nu_{0h}\lambda_h}{d}\,,\ h_c = \frac{Nu_{0c}\lambda_c}{d} \tag{3}$$

wobei die Indizes h und c die Fluide auf der heißen beziehungsweise kalten Seite darstellen und $d$ der Kanaläquivalentdurchmesser ist,

Ermitteln des Gesamtwärmeübertragungskoeffizienten $k$ durch folgenden Term:

$$k = \frac{1}{\frac{1}{h_h} + \frac{\delta}{\lambda} + \frac{1}{h_c}}$$

(4)

wobei $\lambda$ die Wärmeleitfähigkeit einer Metallplatte zwischen den Kanälen für den kalten und den heißen Durchfluss ist und $\delta$ die durchschnittliche Dicke der Platte ist,
Ermitteln des Wärmestroms durch den Gesamtwärmeübertragungskoeffizienten und die logarithmische mittlere Temperaturdifferenz:

$$q = k\Delta t_m$$

(5)

Berechnen der gesamten Wärmeübertragungsfläche A gemäß der Wärmeübertragungsmenge q und dem Wärmestrom, Berechnen einer Durchflusskanallänge L pro Einheit gemäß der Anzahl der Durchflusskanäle N und einer Wärmeübertragungsfläche des Durchflusskanals pro Einheit:

$$A = \frac{\Phi}{q}$$

(6)

$$l = \frac{A}{2N(\pi+2)R}$$

(7);

ein Modul zum Erstellen eines Modells zur Steuerung des thermischen Gleichgewichts (303), ausgebildet zum Unterteilen jedes der Fluidkanäle entlang einer Durchflussrichtung und zum Erstellen eines Modells zur Steuerung des thermischen Gleichgewichts für jeden unterteilten Fluidkanal basierend auf dem vorläufigen Aufbau des Wärmetauschers, wobei die Fluidkanäle Heißfluidkanäle und Kaltfluidkanäle umfassen, wobei jeder der Fluidkanäle eine Vielzahl der unterteilten Fluidkanäle umfasst, umfassend:

eine Einrichtung zum Erstellen eines Modells zur Steuerung des thermischen Gleichgewichts, ausgebildet zum Erstellen eines Modells zur Steuerung des thermischen Gleichgewichts, und das Modell zur Steuerung des thermischen Gleichgewichts lautet wie folgt:

$$q_i = q_{m\_hi}c_{p\_hi}(t_{hi} - t_{hi+1})$$

$$q_i = q_{m\_ci}c_{p\_ci}(t_{ci} - t_{ci+1})$$

$$q_i = k_i A_i(t_{m\_hi} - t_{m\_ci});$$

wobei $q_i$ ein Wärmestrom in einem *i-ten* unterteilten Fluidkanal ist; $q_{m\_ci}$ ein Durchfluss eines kalten Fluids ist; $q_{m\_hi}$ ein Durchfluss eines heißen Fluids ist; $c_{p\_hi}$ eine spezifische Wärmekapazität bei konstantem Druck des heißen Fluids ist; $c_{p\_ci}$ eine spezifische Wärmekapazität bei konstantem Druck des kalten Fluids ist; $t_{m\_ci}$ eine Temperatur des ersten Arbeitsfluids an einem Zentralknoten des *i-ten* unterteilten Fluidkanals ist; $t_{m\_hi}$ eine Temperatur des zweiten Arbeitsfluids an dem Zentralknoten des *i-ten* unterteilten Fluidkanals ist; $A_i$ eine Wärmeübertragungsfläche in dem *i-ten* unterteilten Fluidkanal ist; *i* den *i-ten* unterteilten Fluidkanal darstellt und *i+1* einen nächsten unterteilten Fluidkanal relativ zu dem *i-ten* unterteilten Fluidkanal darstellt;
ein Modul zum Konstruieren eines Maschinen-Wärmeübertragungsmodells (304), ausgebildet zum Konstruieren des Maschinen-Wärmeübertragungsmodells in Kombination mit einem Gaußschen Regressionsverfahren und einem Cokriging-Verfahren, basierend auf dem Modell zur Steuerung des thermischen Gleichgewichts, umfassend:

ein Modul zum Ermitteln von Wärmeübertragungsdaten des überkritischen Druckfluids, ausgebildet zum Ermitteln der Wärmeübertragungsdaten des überkritischen Druckfluids, wobei die Wärmeübertragungsdaten des überkritischen Druckfluids Wärmeübertragungsdaten zweiter Genauigkeit und Wärmeübertragungsdaten erster Genauigkeit umfassen, wobei die Wärmeübertragungsdaten zweiter Genauigkeit ein Datensatz sind, der aus experimentellen oder numerischen Simulationsdaten ermittelt wird; wobei die Wärmeübertragungsdaten erster Genauigkeit ein Datensatz sind, der durch eine dimensionslose Kennwert-Korrelationsgleichung vorhergesagt wird, wobei die Wärmeübertragungsdaten des überkritischen Druckfluids eine Einweg-Durchflussrate des Fluids, eine Wandoberflächentemperatur, eine Temperatur eines Hauptdurchflusses des Fluids, ein Fluiddruck, ein konvektiver Wärmeübertragungskoeffizient und eine charakteristische Kanallänge sind;

ein Modul zum Vorverarbeiten, ausgebildet zum Vorverarbeiten der Wärmeübertragungsdaten des überkritischen Druckfluids und zum Bestimmen vorverarbeiteter Wärmeübertragungsdaten des überkritischen Druckfluids, wobei die vorverarbeiteten Wärmeübertragungsdaten des überkritischen Druckfluids vorverarbeitete Wärmeübertragungsdaten erster Genauigkeit und vorverarbeitete Wärmeübertragungsdaten zweiter Genauigkeit umfassen;

ein Modul zum Bestimmen eines Modells niedriger Genauigkeit, ausgebildet zum Bestimmen des Modells erster Genauigkeit gemäß den vorverarbeiteten Wärmeübertragungsdaten erster Genauigkeit basierend auf einer Gaußschen Regressionsgleichung;

ein Modul zum Bestimmen eines Modells hoher Genauigkeit, ausgebildet zum Bestimmen eines Modells zweiter Genauigkeit gemäß den vorverarbeiteten Wärmeübertragungsdaten zweiter Genauigkeit basierend auf der Gaußschen Regressionsgleichung, wobei die Wärmeübertragungsdaten erster Genauigkeit eine geringere Genauigkeit aufweisen als die Wärmeübertragungsdaten zweiter Genauigkeit;

ein Modul zum Bestimmen eines Modells mit mehreren Genauigkeiten, ausgebildet zum Bestimmen des Modells mit mehreren Genauigkeiten gemäß den Wärmeübertragungsdaten erster Genauigkeit, dem Modell erster Genauigkeit, den Wärmeübertragungsdaten zweiter Genauigkeit und dem Modell zweiter Genauigkeit durch Anwendung eines Cokriging-Verfahrens basierend auf dem Modell zur Steuerung des thermischen Gleichgewichts, wobei das Modell mit mehreren Genauigkeiten ein Maschinen-Wärmeübertragungsmodell ist, das dimensionslose Parameter von abgeschirmten Wärmeübertragungsdaten des überkritischen Druckfluids als Eingangsgröße und den konvektiven Wärmeübertragungskoeffizienten als Ausgangsgröße nimmt, wobei die abgeschirmten Wärmeübertragungsdaten des überkritischen Druckfluids die Einweg-Durchflussrate des Fluids, die Wandoberflächentemperatur, die Temperatur des Hauptdurchflusses des Fluids, den Fluiddruck, und die charakteristische Kanallänge umfassen, wobei das Maschinen-Wärmeübertragungsmodell zum Bestimmen von Einweg-Wärmeparametern über das Arbeitsfluid verwendet wird, das in den Fluidkanälen fließt und Wärme überträgt,

wobei das Modul zum Bestimmen eines Modells mit mehreren Genauigkeiten gemäß den Wärmeübertragungsdaten erster Genauigkeit, dem Modell erster Genauigkeit, den Wärmeübertragungsdaten zweiter Genauigkeit und dem Modell zweiter Genauigkeit durch Verwendung des Cokriging-Verfahrens umfasst:

eine Einrichtung zum Unterteilen, ausgebildet zum Unterteilen der Wärmeübertragungsdaten zweiter Genauigkeit in einen Trainingssatz und einen Testsatz;
eine Einrichtung zum Bestimmen eines Modells mit mehreren Genauigkeiten, ausgebildet zum Bestimmen eines Modells mit mehreren Genauigkeiten gemäß einer

Formel: $\widehat{f}_2(X) = \rho(X)\widehat{f}_1(X) + \delta(X)$ durch Verwendung des Trainingssatzes,

wobei $\widehat{f}_2(X)$ ein Modell zweiter Genauigkeit ist; $\widehat{f}_1(X)$ ein Modell erster Genauigkeit ist; $\rho(X)$ ein Skalierungsfaktor zur Quantifizierung einer Beziehung zwischen Ausgangsgrößen des Modells zweiter Genauigkeit und des Modells erster Genauigkeit ist; $\delta(X)$ ein Gauß-Prozess ist;
ein Modul zum Bestimmen von Einweg-Wärmeparametern (305), ausgebildet zum Bestimmen der konvektiven Wärmeübertragungskoeffizienten der Arbeitsfluide, die in den Fluidkanälen gemäß dem Maschinen-Wärmeübertragungsmodell fließen und Wärme übertragen, wobei die Einweg-Wärmeparameter eine Fluidtemperatur, eine Fluidgeschwindigkeit und einen Druckverlust umfassen;

ein Modul zum Bestimmen einer Wärmeübertragungsfläche (306), ausgebildet zum Bestimmen der Wärmeübertragungsfläche gemäß den konvektiven Wärmeübertragungskoeffizienten;

ein erstes Modul zum Bestimmen (307), ausgebildet zum Bestimmen, ob die Wärmeübertragungsfläche einer Ziel-Wärmeübertragungsfläche entspricht, um ein erstes Bestimmungsergebnis zu erhalten;

ein Modul zur Herstellung des Wärmetauschers (308), ausgebildet zum Anweisen, den Wärmetauscher gemäß dem vorläufigen Aufbau des Wärmetauschers herzustellen, wenn das erste Bestimmungsergebnis anzeigt, dass die Wärmeübertragungsfläche der Ziel-Wärmeübertragungsfläche entspricht; und

ein Modul zum Anpassen des vorläufigen Aufbaus des Wärmetauschers (309), ausgebildet zum Neuanpassen des vorläufigen Aufbaus des Wärmetauschers zur Wiederholung der obigen Schritte, bis die Wärmeübertragungsfläche der Ziel-Wärmeübertragungsfläche entspricht, wenn das erste Bestimmungsergebnis anzeigt, dass die Wärmeübertragungsfläche der Ziel-Wärmeübertragungsfläche nicht entspricht, und zum Anweisen, den Wärmetauscher gemäß einem neuangepassten vorläufigen Aufbau des Wärmetauschers herzustellen.

**Revendications**

1. Procédé pour fabriquer un échangeur de chaleur pour un fluide à pression supercritique, dans lequel l'échangeur de chaleur comporte un premier fluide de travail qui est disposé à l'intérieur de passages de fluide chaud de l'échangeur de chaleur et un second fluide de travail qui est disposé à l'intérieur de passages de fluide froid de l'échangeur de chaleur, le procédé comprenant les étapes suivantes :

la réception de conditions aux limites de l'échangeur de chaleur (101), les conditions aux limites comprenant des paramètres de premier fluide de travail et des paramètre de second fluide de travail, les paramètres de premier fluide de travail comprenant une température d'entrée, une température de sortie, une pression et un débit ou un écoulement du premier fluide de travail, les paramètres de second fluide de travail comprenant une température d'entrée, une température de sortie, une pression et un débit ou un écoulement du second fluide de travail ;

le réglage d'une structure préliminaire de l'échangeur de chaleur sur la base des conditions aux limites (102), la structure préliminaire de l'échangeur de chaleur comprenant un diamètre équivalent de passage, une longueur de passage, un nombre de passages et des dispositions de passages de fluide froid et de passages de fluide chaud de l'échangeur de chaleur,

dans lequel le réglage d'une structure préliminaire de l'échangeur de chaleur sur la base des conditions aux limites (102) comprend :

la détermination d'un nombre de Nusselt moyen conformément aux paramètres de premier fluide de travail et aux paramètres de second fluide de travail ;

la détermination, de façon respective, d'un premier coefficient de transfert de chaleur par convection moyen du premier fluide de travail et d'un second coefficient de transfert de chaleur par convection moyen du second fluide de travail ainsi que la détermination du diamètre équivalent de passage conformément au nombre de Nusselt moyen ;

la détermination d'un coefficient de transfert de chaleur total conformément au premier coefficient de transfert de chaleur par convection moyen et au second coefficient de transfert de chaleur par convection moyen ;

la détermination d'une quantité de transfert de chaleur conformément au coefficient de transfert de chaleur total ;

la détermination de la longueur de passage et du nombre de passages conformément à la quantité de transfert de chaleur ;

la détermination des dispositions de passages de fluide froid et de passages de fluide chaud conformément à la longueur de passage et au nombre de passages ;

la détermination de la structure préliminaire de l'échangeur de chaleur conformément au diamètre équivalent de passage, à la longueur de passage, au nombre de passages et aux dispositions de passages de fluide froid et de passages de fluide chaud ;

dans lequel la détermination d'un nombre de Nusselt moyen conformément aux paramètres de premier fluide de travail et aux paramètres de second fluide de travail comprend :

le calcul d'une différence de température moyenne logarithmique au moyen d'une expression suivante conformément aux températures d'entrée et de sortie du premier fluide de travail et du second fluide de travail :

$$\Delta t_m = \frac{\Delta t' - \Delta t''}{ln\frac{\Delta t'}{\Delta t''}} \tag{1}$$

expression dans laquelle $\Delta t'$ est une valeur de différence entre une température d'entrée d'un fluide de travail au niveau d'un côté chaud et une température de sortie d'un fluide de travail au niveau d'un côté froid, $\Delta t''$ est une valeur de différence entre une température de sortie du fluide de travail au niveau du côté chaud et une température d'entrée du fluide de travail au niveau du côté froid ;

la détermination de paramètres de propriété physique des fluides de travail à une température qualitative, tels que la densité $\rho$, la viscosité dynamique $\mu$, la conductivité thermique $\lambda$ à l'aide des températures d'entrée et de sortie et d'une information de pression des fluides de travail au niveau des deux côtés de l'échangeur de chaleur, le calcul de nombres exprimant des critères tels qu'un nombre de Reynolds moyen $Re_b$ du débit ou de l'écoulement principal et un nombre de Prandtl $Pr$ et le calcul du nombre de Nusselt moyen $Nu_0$ au moyen de l'équation de corrélation des critères suivante :

$$Nu_0 = \frac{(\xi/8)\,Re_b\,\overline{Pr}}{12.7\sqrt{\xi/8}\left(\overline{Pr^{2/3}}-1\right)+1.07} \;,\; \xi = \frac{1}{(1.82\,log_{10}Re_b-1.64)^2} \tag{2}$$

équation dans laquelle $\overline{Pr}$ est le nombre de Prandtl moyen, $\xi$ est un facteur de friction ;

dans lequel la détermination de la structure préliminaire de l'échangeur de chaleur comprend :

le calcul des coefficients de transfert de chaleur par convection moyens de fluides de travail dans les passages au niveau des deux côtés de l'unité de transfert de chaleur :

$$h_h = \frac{Nu_{0h}\lambda_h}{d} \;,\; h_c = \frac{Nu_{0c}\lambda_c}{d} \tag{3}$$

formules dans lesquelles les indices h et c représentent respectivement les fluides au niveau des côtés chaud et froid et d est le diamètre équivalent de passage d'écoulement ;

l'obtention d'un coefficient de transfert de chaleur total k au moyen de l'expression suivante :

$$k = \frac{1}{\frac{1}{h_h}+\frac{\delta}{\lambda}+\frac{1}{h_c}} \tag{4}$$

expression dans laquelle $\lambda$ est une conductivité thermique d'une plaque en métal entre les passages d'écoulement froid et chaud et $\delta$ est une épaisseur moyenne de la plaque en métal ;

l'obtention du flux de chaleur au moyen du coefficient de transfert de chaleur total et de la différence de température moyenne logarithmique :

$$q = k\Delta t_m \tag{5}$$

le calcul de l'aire de transfert de chaleur totale A conformément à la quantité de transfert de chaleur q et au flux de chaleur, le calcul d'une longueur de passage de débit ou d'écoulement unitaire L conformément au nombre N des passages d'écoulement et à une aire de surface de transfert de chaleur unitaire du oassase d'écoulement :

$$A = \frac{\Phi}{q} \tag{6}$$

$$l = \frac{A}{2N(\pi+2)R} \tag{7}$$

la division de chacun des passages de fluide suivant une direction de débit ou d'écoulement de fluide et l'établissement d'un modèle de contrôle et de régulation d'équilibre thermique pour chaque passage de fluide divisé sur la base de la structure préliminaire de l'échangeur de chaleur (103), les passages de fluide comprenant les passages de fluide chaud et les passages de fluide froid ; chacun des passages de fluide comprenant une pluralité des passages de fluide divisés ; dans lequel le modèle de contrôle et de régulation d'équilibre thermique est comme suit :

$$q_i = q_{m\_hi} c_{p\_hi}(t_{hi} - t_{hi+1})$$

$$q_i = q_{m\_ci} c_{p\_ci}(t_{ci} - t_{ci+1})$$

$$q_i = k_i A_i (t_{m\_hi} - t_{m\_ci}) ;$$

modèle dans lequel qi est un flux de chaleur dans un i-ième passage de fluide divisé ; qm_ci est un débit ou un écoulement d'un fluide froid ; qm_hi est un débit ou un écoulement d'un fluide chaud ; cp_hi est une capacité de chaleur thermique spécifique à pression constante du fluide chaud ; cp_ci est une capacité de chaleur thermique spécifique à pression constante du fluide froid ; tm_ci est une température du premier fluide de travail au niveau d'un noeud central du i-ième passage de fluide divisé ; tm_hi est une température du second fluide de travail au niveau du noeud central du i-ième passage de fluide divisé ; Ai est une aire de transfert de chaleur dans le i-ième passage de fluide divisé ; i représente le i-ième passage de fluide divisé et i + 1 représente un passage de fluide divisé suivant par rapport au i-ième passage de fluide divisé ; la construction d'un modèle de transfert de chaleur machine en combinaison avec un processus de régression gaussienne et un procédé de cokrigeage sur la base du modèle de contrôle et de régulation d'équilibre thermique (104) comprenant :

l'obtention de données de transfert de chaleur du fluide à pression supercritique, les données de transfert de chaleur du fluide à pression supercritique comprenant des données de transfert de chaleur de seconde précision et des données de transfert de chaleur de première précision, les données de transfert de chaleur de seconde précision étant un ensemble de données qui est obtenu à partir de données d'expérimentation ou de données de simulation numérique ; les données de transfert de chaleur de première précision étant un ensemble de données qui est prédit au moyen d'une équation de corrélation des critères adimensionnelle, les données de transfert de chaleur du fluide à pression supercritique étant un débit d'écoulement unidirectionnel du fluide, une température de la surface de paroi, une température d'un écoulement principal du fluide, une pression du fluide, un coefficient de transfert de chaleur par convection et une longueur caractéristique de passage ;

le prétraitement des données de transfert de chaleur du fluide à pression supercritique et la détermination de données de transfert de chaleur prétraitées du fluide à pression supercritique, les données de transfert de chaleur prétraitées du fluide à pression supercritique comprenant des données de transfert de chaleur de première précision prétraitées et des données de transfert de chaleur de seconde précision prétraitées ;

la détermination d'un modèle de première précision conformément aux données de transfert de chaleur de première précision prétraitées sur la base d'une équation de régression gaussienne ;

la détermination d'un modèle de seconde précision conformément aux données de transfert de chaleur de seconde précision prétraitées sur la base de l'équation de régression gaussienne ;

la détermination d'un modèle à multiples précisions conformément aux données de transfert de chaleur de première précision, au modèle de première précision, aux données de transfert de chaleur de seconde précision et au modèle de seconde précision en utilisant le procédé de cokrigeage sur la base du modèle de contrôle et de régulation d'équilibre thermique, le modèle à multiples précisions étant un modèle de transfert de chaleur machine qui prend en compte des paramètres adimensionnels de données de transfert de chaleur sélectionnées du fluide à pression supercritique en tant qu'entrée et qui prend en compte le coefficient de transfert de chaleur par convection en tant que sortie, les données de transfert de chaleur sélectionnées du fluide à pression supercritique comprenant le débit d'écoulement unidirectionnel du fluide, la température de la surface de paroi, la température de l'écoulement principal du fluide, la pression du fluide, le coefficient de transfert de chaleur par convection et la longueur caractéristique de passage, le modèle de transfert de chaleur machine étant utilisé pour déterminer des paramètres thermiques unidirectionnels qui concernent le fluide de travail qui s'écoule et qui transfère de la chaleur dans les passages de fluide ;

dans lequel la détermination d'un modèle à multiples précisions conformément aux données de transfert de chaleur de première précision, au modèle de première précision, aux données de transfert de chaleur de seconde précision et au modèle de seconde précision en utilisant le procédé de cokrigeage comprend :

la division des données de transfert de chaleur de seconde précision selon un ensemble d'apprentissage et un ensemble de test ;

la détermination du modèle à multiples précisions conformément à une formule :

$$\widehat{f}_2(X) = \rho(X)\widehat{f}_1(X) + \delta(X)$$

en utilisant l'ensemble d'apprentissage, formule dans laquelle $\widehat{f}_2(X)$ est un modèle de seconde précision ; $\widehat{f}_1(X)$ est un modèle de première précision ; $\rho(X)$ est un facteur d'échelle pour quantifier une relation entre des sorties du modèle de seconde précision et du modèle de première précision ; $\delta(X)$ est un processus gaussien ;

la détermination de coefficients de transfert de chaleur par convection qui concernent les fluides de travail qui s'écoulent et transfèrent de la chaleur dans les passages de fluide conformément au modèle de transfert de chaleur machine (105) ;

la détermination d'une aire de transfert de chaleur conformément aux coefficients de transfert de chaleur par convection (106) ;

la détermination de si l'aire de transfert de chaleur satisfait ou non une aire de transfert de chaleur cible, pour obtenir un premier résultat de détermination (107) ;

la fabrication de l'échangeur de chaleur conformément à la structure préliminaire de l'échangeur de chaleur, lorsque le premier résultat de détermination indique que l'aire de transfert de chaleur satisfait l'aire de transfert de chaleur cible (108) ;

le réglage à nouveau de la structure préliminaire de l'échangeur de chaleur en répétant les étapes qui ont été mentionnées ci-avant jusqu'à ce que l'aire de transfert de chaleur satisfasse l'aire de transfert de chaleur cible, lorsque le premier résultat de détermination indique que l'aire de transfert de chaleur échoue à satisfaire l'aire de transfert de chaleur cible, et la fabrication de l'échangeur de chaleur conformément à la structure préliminaire de l'échangeur de chaleur (109).

**2.** Système pour fabriquer un échangeur de chaleur pour un fluide à pression supercritique, comprenant un premier fluide de travail qui est disposé à l'intérieur de passages de fluide chaud de l'échangeur de chaleur et un second fluide de travail qui est disposé à l'intérieur de passages de fluide froid de l'échangeur de chaleur, le système comprenant :

un module pour obtenir des conditions aux limites (301), configuré pour recevoir les conditions aux limites de l'échangeur de chaleur, les conditions aux limites comprenant des paramètres de premier fluide de travail et des paramètre de second fluide de travail, les paramètres de premier fluide de travail comprenant une température d'entrée, une température de sortie, une pression et un débit ou un écoulement du premier fluide de travail, les paramètres de second fluide de travail comprenant une température d'entrée, une température de sortie, une pression et un débit ou un écoulement du second fluide de travail ;

un module pour régler une structure préliminaire de l'échangeur de chaleur (302), configuré pour régler la structure préliminaire de l'échangeur de chaleur sur la base des conditions aux limites, la structure préliminaire de l'échangeur de chaleur comprenant un diamètre équivalent de passage, une longueur de passage, un nombre de passages et des dispositions de passages de fluide froid et de passages de fluide chaud de l'échangeur de chaleur, comprenant :

une unité pour déterminer un nombre de Nusselt moyen, configurée pour déterminer un nombre de Nusselt moyen conformément aux paramètres de premier fluide de travail et aux paramètres de second fluide de travail ;

une unité pour déterminer le diamètre équivalent de passage, configurée pour déterminer, de façon respective, un premier coefficient de transfert de chaleur par convection moyen du premier fluide de travail et un second coefficient de transfert de chaleur par convection moyen du second fluide de travail ainsi que pour déterminer le diamètre équivalent de passage conformément au nombre de Nusselt moyen ;

une unité pour déterminer un coefficient de transfert de chaleur total, configurée pour déterminer le coefficient de transfert de chaleur total conformément au premier coefficient de transfert de chaleur par convection moyen et au second coefficient de transfert de chaleur par convection moyen ;

une unité pour déterminer une quantité de transfert de chaleur, configurée pour déterminer la quantité de transfert de chaleur conformément au coefficient de transfert de chaleur total ;

une unité pour déterminer la longueur de passage et le nombre de passages, configurée pour déterminer la longueur de passage et le nombre de passages conformément à la quantité de transfert de chaleur ;

une unité pour déterminer les dispositions de passages de fluide froid et de passages de fluide chaud, configurée pour déterminer les dispositions de passages de fluide froid et de passages de fluide chaud conformément à la longueur de passage et au nombre de passages ;

une unité pour déterminer la structure préliminaire de l'échangeur de chaleur, configurée pour déterminer la structure préliminaire de l'échangeur de chaleur conformément au diamètre équivalent de passage, à la longueur de passage, au nombre de passages et aux dispositions de passages de fluide froid et de passages de fluide chaud ;

dans lequel la détermination d'un nombre de Nusselt moyen conformément aux paramètres de premier fluide de travail et aux paramètres de second fluide de travail comprend :

le calcul d'une différence de température moyenne logarithmique au moyen d'une expression suivante conformément aux températures d'entrée et de sortie du premier fluide de travail et du second fluide de travail :

$$\Delta t_m = \frac{\Delta t' - \Delta t''}{ln\frac{\Delta t'}{\Delta t''}} \qquad (1)$$

expression dans laquelle □t' est une valeur de différence entre une température d'entrée d'un fluide de travail au niveau d'un côté chaud et une température de sortie d'un fluide de travail au niveau d'un côté froid, □t" est une valeur de différence entre une température de sortie du fluide de travail au niveau du côté chaud et une température d'entrée du fluide de travail au niveau du côté froid ;

la détermination de paramètres de propriété physique des fluides de travail à une température qualitative, tels que la densité □, la viscosité dynamique $\mu$, la conductivité thermique □ à l'aide des températures d'entrée et de sortie et d'une information de pression des fluides de travail au niveau des deux côtés de l'échangeur de chaleur, le calcul de nombres exprimant des critères tels qu'un nombre de Reynolds moyen Reb du débit ou de l'écoulement principal et un nombre de Prandtl Pr et le calcul du nombre de Nusselt moyen Nu0 au moyen de l'équation de corrélation des critères suivante :

$$Nu_0 = \frac{(\xi/8)\,Re_b\,\overline{Pr}}{12.7\sqrt{\xi/8}\left(\overline{Pr^{2/3}}-1\right)+1.07} \; , \; \xi = \frac{1}{(1.82\,log_{10}Re_b-1.64)^2} \tag{2}$$

équation dans laquelle $\overline{Pr}$ est le nombre de Prandtl moyen, $\xi$ est un facteur de friction ;
dans lequel la détermination de la structure préliminaire de l'échangeur de chaleur comprend :

le calcul des coefficients de transfert de chaleur par convection moyens de fluides de travail dans les passages au niveau des deux côtés de l'unité de transfert de chaleur :

$$h_h = \frac{Nu_{0h}\lambda_h}{d} \; , \; h_c = \frac{Nu_{0c}\lambda_c}{d} \tag{3}$$

formules dans lesquelles les indices h et c représentent respectivement les fluides au niveau des côtés chaud et froid et d est le diamètre équivalent de passage d'écoulement ;
l'obtention d'un coefficient de transfert de chaleur total k au moyen de l'expression suivante :

$$k = \frac{1}{\frac{1}{h_h}+\frac{\delta}{\lambda}+\frac{1}{h_c}} \tag{4}$$

expression dans laquelle □ est une conductivité thermique d'une plaque en métal entre les passages d'écoulement froid et chaud et □ est une épaisseur moyenne de la plaque en métal ;
l'obtention du flux de chaleur au moyen du coefficient de transfert de chaleur total et de la différence de température moyenne logarithmique :

$$q = k\Delta t_m \tag{5}$$

le calcul de l'aire de transfert de chaleur totale A conformément à la quantité de transfert de chaleur q et au flux de chaleur, le calcul d'une longueur de passage de débit ou d'écoulement unitaire L conformément au nombre N des passages d'écoulement et à une aire de surface de transfert de chaleur unitaire du passage d'écoulement :

$$A = \frac{\Phi}{q} \tag{6}$$

$$l = \frac{A}{2N(\pi+2)R} \tag{7}$$

un module pour établir un modèle de contrôle et de régulation d'équilibre thermique (303), configuré pour diviser chacun des passages de fluide suivant une direction de débit ou d'écoulement de fluide et pour établir un modèle de contrôle et de régulation d'équilibre thermique pour chaque passage de fluide divisé sur la base de la structure préliminaire de l'échangeur de chaleur, les passages de fluide comprenant les passages de fluide chaud et les passages de fluide froid, chacun des passages de fluide comprenant une pluralité des passages de fluide divisés, comprenant :

une unité pour établir un modèle de contrôle et de régulation d'équilibre thermique, configurée pour établir un modèle de contrôle et de régulation d'équilibre thermique, et le modèle de contrôle et de régulation d'équilibre thermique étant comme suit :

$$q_i = q_{m\_hi} c_{p\_hi} (t_{hi} - t_{hi+1})$$

$$q_i = q_{m\_ci} c_{p\_ci} (t_{ci} - t_{ci+1})$$

$$q_i = k_i A_i (t_{m\_hi} - t_{m\_ci}) ;$$

modèle dans lequel qi est un flux de chaleur dans un i-ième passage de fluide divisé ; qm_ci est un débit ou un écoulement d'un fluide froid ; qm_hi est un débit ou un écoulement d'un fluide chaud ; cp_hi est une capacité de chaleur thermique spécifique à pression constante du fluide chaud ; cp_ci est une capacité de chaleur thermique spécifique à pression constante du fluide froid ; tm_ci est une température du premier fluide de travail au niveau d'un noeud central du i-ième passage de fluide divisé ; tm_hi est une température du second fluide de travail au niveau du noeud central du i-ième passage de fluide divisé ; Ai est une aire de transfert de chaleur dans le i-ième passage de fluide divisé ; i représente le i-ième passage de fluide divisé ; et i + 1 représente un passage de fluide divisé suivant par rapport au i-ième passage de fluide divisé ;

un module pour construire un modèle de transfert de chaleur machine (304), configuré pour construire le modèle de transfert de chaleur machine en combinaison avec un processus de régression gaussienne et un procédé de cokrigeage sur la base du modèle de contrôle et de régulation d'équilibre thermique, comprenant :

un module pour obtenir des données de transfert de chaleur du fluide à pression supercritique, configuré pour obtenir les données de transfert de chaleur du fluide à pression supercritique, les données de transfert de chaleur du fluide à pression supercritique comprenant des données de transfert de chaleur de seconde précision et des données de transfert de chaleur de première précision, les données de transfert de chaleur de seconde précision étant un ensemble de données qui est obtenu à partir de données d'expérimentation ou de données de simulation numérique ; les données de transfert de chaleur de première précision étant un ensemble de données qui est prédit au moyen d'une équation de corrélation des critères adimensionnelle, les données de transfert de chaleur du fluide à pression supercritique étant un débit d'écoulement unidirectionnel du fluide, une température de la surface de paroi, une température d'un écoulement principal du fluide, une pression du fluide, un coefficient de transfert de chaleur par convection et une longueur caractéristique de passage ;

un module de prétraitement, configuré pour prétraiter les données de transfert de chaleur du fluide à pression supercritique et pour déterminer des données de transfert de chaleur prétraitées du fluide à pression supercritique, les données de transfert de chaleur prétraitées du fluide à pression supercritique comprenant des données de transfert de chaleur de première précision prétraitées et des données de transfert de chaleur de seconde précision prétraitées ;

un module pour déterminer un modèle à faible précision, configuré pour déterminer le modèle de première précision conformément aux données de transfert de chaleur de première précision prétraitées sur la base d'une équation de régression gaussienne ; un module pour déterminer un modèle à haute précision, configuré pour déterminer un modèle de seconde précision conformément aux données de transfert de chaleur de seconde précision prétraitées sur la base de l'équation de régression gaussienne, dans lequel les données de transfert de chaleur de première précision présentent une précision plus faible que la précision des données de transfert de chaleur de seconde précision ; un module pour déterminer un modèle à multiples précisions, configuré pour déterminer le modèle à multiples précisions conformément aux données de transfert de chaleur de première précision, au modèle de première précision, aux données de transfert de chaleur de seconde précision et au modèle de seconde précision en utilisant un procédé de cokrigeage sur la base du modèle de contrôle et de régulation d'équilibre thermique, le modèle à multiples précisions étant un modèle de transfert de chaleur machine qui prend en compte des paramètres adimensionnels de données de transfert de chaleur sélectionnées du fluide à pression supercritique en tant qu'entrée et qui prend en compte le coefficient de transfert de chaleur par convection en tant que sortie, les données de transfert de chaleur sélectionnées du fluide à pression supercritique comprenant le débit d'écoulement unidirectionnel du fluide, la température de la surface de paroi, la température de l'écoulement principal du fluide, la pression du fluide et la longueur caractéristique de passage, le modèle de transfert de chaleur machine étant utilisé pour déterminer les paramètres thermiques unidirectionnels qui concernent le fluide de travail qui s'écoule et qui transfère de la chaleur dans les passages de fluide ; dans lequel le module pour déterminer un modèle à multiples précisions conformément aux données de transfert de chaleur de première précision, au modèle de première précision, aux données de transfert de chaleur de seconde précision et au modèle de seconde précision en utilisant le procédé de cokrigeage comprend :

une unité de division, configurée pour diviser les données de transfert de chaleur de seconde précision selon un ensemble d'apprentissage et un ensemble de test ;
une unité pour déterminer un modèle à multiples précisions, configurée pour déterminer un modèle à multiples précisions conformément à une formule :

$$\widehat{f}_2(X) = \rho(X)\widehat{f}_1(X) + \delta(X)$$

en utilisant l'ensemble d'apprentissage, formule dans laquelle $\widehat{f}_2(X)$ est un modèle de seconde précision ; $\widehat{f}_1(X)$ est un modèle de première précision ; $\rho(X)$ est un facteur d'échelle pour quantifier une relation entre des sorties du modèle de seconde précision et du modèle de première précision ; $\delta(X)$ est un processus gaussien ;
un module pour déterminer des paramètres thermiques unidirectionnels (305), configuré pour déterminer des coefficients de transfert de chaleur par convection qui concernent les fluides de travail qui s'écoulent et transfèrent de la chaleur dans les passages de fluide conformément au modèle de transfert de chaleur machine, les paramètres thermiques unidirectionnels comprenant une température de fluide, une vitesse de fluide et une perte de pression ;
un module pour déterminer une aire de transfert de chaleur (306), configuré pour déterminer l'aire de transfert de chaleur conformément aux coefficients de transfert de chaleur par convection ;
un premier module de détermination (307), configuré pour déterminer si l'aire de transfert de chaleur satisfait ou non une aire de transfert de chaleur cible pour obtenir un premier résultat de détermination ;
un module pour fabriquer l'échangeur de chaleur (308), configuré pour demander la fabrication de l'échangeur de chaleur conformément à la structure préliminaire de l'échangeur de chaleur, lorsque le premier résultat de détermination indique que l'aire de transfert de chaleur satisfait l'aire de transfert de chaleur cible ; et
un module pour régler la structure préliminaire de l'échangeur de chaleur (309), configuré pour régler à nouveau la structure préliminaire de l'échangeur de chaleur en répétant les étapes qui ont été mentionnées ci-avant jusqu'à ce que l'aire de transfert de chaleur satisfasse l'aire de transfert de chaleur cible, lorsque le premier résultat de détermination indique que l'aire de transfert de chaleur échoue à satisfaire l'aire de transfert de chaleur cible et pour demander la fabrication de l'échangeur de chaleur conformément à une structure préliminaire réglée à nouveau de l'échangeur de chaleur.

Receive boundary conditions of the heat exchanger — 101

Adjust a preliminary framework of the heat exchanger based on the boundary conditions — 102

Divide each of fluid passages along a fluid flow direction and establish a thermal equilibrium control model for each divided fluid passage based on the preliminary framework of the heat exchanger — 103

Construct a machine heat transfer model in combination with a Gaussian regression process and a Gokriging method based on the thermal equilibrium control model — 104

Determine convective heat transfer coefficients about the working fluids flowing and transferring heat in the fluid passages according to the machine heat transfer model — 105

Determine a heat transfer area according to the convective heat transfer coefficients — 106

Determine whether the heat transfer area meets a target heat transfer area — 107

Manufacture the heat exchanger according to the preliminary framework of the heat exchanger — 108

Readjust the preliminary framework of the heat exchanger for repeating the above steps until the heat transfer area meets the target heat transfer area, and manufacture the heat exchanger according to the preliminary framework of the heat exchanger — 109

FIG. 1

FIG. 2

Module for obtaining
boundary conditions — 301

Module for adjusting a preliminary
framework of heat exchanger — 302

Module for establishing a thermal
equilibrium control model — 303

Module for constructing a machine
heat transfer model — 304

Module for determining on-way
thermal parameters — 305

Module for determining
heat transfer area — 306

First determination module — 307

Module for manufacturing a heat
exchanger for
supercritical pressure fluid — 308

Module for adjusting the preliminary
framework of heat exchanger — 309

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109508854 A

- CN 202010716041

**Non-patent literature cited in the description**

- A cooperative radial basis function method for variable-fidelity surrogate modeling. **LI XU et al.** STRUCTURAL AND MULTDISCIPLINARY OPTIMIZATION. SPRINGER BERLIN HEIDELBERG, 15 May 2017, vol. 56, 1077-1092
- **YANG XIU et al.** Physics-informed CoKriging: A Gaussian-process-regression-based multifidelity method for data-model convergence. *JOURNAL OF COMPUTATIONAL PHYSICS, LONDON, GB,* 19 June 2019, vol. 395, 410-431

- Optimization of the cyclone separator geometry for minimum pressure drop using Co-Kriging. **ELSAYED KHAIRY ED ; SALMAN AGBA D et al.** POWDER TECHNOLOGY. ELSEVIER, 28 September 2014, vol. 269, 409-424
- **KAYABASI E et al.** Simulation of heat exchangers and heat exchanger networks with an economic aspect. *ENGINEERING SCIENCE AND TECHNOLOGY, AN INTERNATIONAL JOURNAL,* 01 February 2018, vol. 21 (1), 70-76